# EUROPEAN PATENT SPECIFICATION

(11) **EP 0 704 675 B1**
(45) Date of publication and mention of the grant of the patent: **02.07.2003**
(21) Application number: 95114050.8
(22) Date of filing: 07.09.1995
(51) Int. Cl.: G01C 21/20, G06F 3/023

(54) **Hierarchical display system for vehicle navigation**
Hierarchisches Anzeigesystem für Fahrzeugnavigation
Système d'affichage hiérarchique pour navigation véhiculaire

(30) Priority: 16.09.1994 JP 24872694; 22.09.1994 JP 25444094
(43) Date of publication of application: 03.04.1996
(73) Proprietor: AISIN AW CO., LTD., Anjo-shi Aichi-ken 444-11 (JP)
(72) Inventor: Moroto, Shuzo, Nagoya-shi, Aichi 458 (JP); Morimoto, Kyomi, Nishio-shi, Aichi 445 (JP); Maekawa, Kazuteru, Nisikamo-gun, Aichi 470-02 (JP); Suzuki, Yukiyoshi, Aichi 444-21 (JP); Asano, Hitoshi, Aichi 457 (JP); Kanemitsu, Hiroyuki, Shizuoka 410-11 (JP)
(74) Representative: VOSSIUS & PARTNER

(56) References cited:
- EP-A- 0 323 230
- EP-A- 0 642 108
- IBM TECHNICAL DISCLOSURE BULLETIN, vol. 37, no. 2B, NEW YORK, US, pages 349-350, ANONYMOUS 'Reorganizing Menu Hierarchy to Best Fit the Individual User'
- PATENT ABSTRACTS OF JAPAN vol. 011 no. 370 (P-642) ,3 December 1987 & JP-A-62 140124 (OMRON TATEISI ELECTRONICS CO) 23 June 1987,
- PATENT ABSTRACTS OF JAPAN vol. 016 no. 514 (P-1442) ,22 October 1992 & JP-A-04 188356 (NEC CORP) 6 July 1992,
- PATENT ABSTRACTS OF JAPAN vol. 013 no. 511 (P-961) ,16 November 1989 & JP-A-01 206424 (MITSUBISHI ELECTRIC CORP) 18 August 1989,
- PATENT ABSTRACTS OF JAPAN vol. 018 no. 129 (P-1703) ,3 March 1994 & JP-A-05 313580 (SUMITOMO ELECTRIC IND LTD) 26 November 1993,
- PATENT ABSTRACTS OF JAPAN vol. 015 no. 245 (P-1218) ,24 June 1991 & JP-A-03 075998 (AISIN AW CO LTD;OTHERS: 01) 29 March 1991,

## Description

The present invention relates to a technique for hierarchically displaying menus to input such information or instruction in accordance with the selection of the menu being displayed.

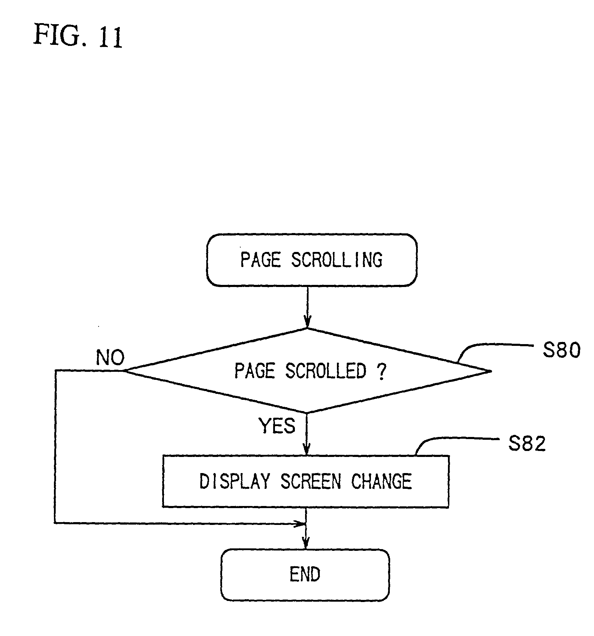

JP-A-173820/1989, discloses a vehicular navigation system with a plurality of menus to be selected by a touching action are hierarchically displayed in a display unit so as to provide conveniences at the time of inputting a destination, as shown in Fig. 11 of this publication. A plurality of genres are enumerated and displayed as a menu of a first hierarchy (as shown in Fig. 11). When any of the genres is selected, the names of a plurality of registered points belonging to the selected genre are then enumerated and displayed as the menu of a subsequent hierarchy (as shown in Fig. 11). When any of the registered points is selected, the position of the selected point is set as the destination on the basis of the data stored in a storage unit.

JP-A-19684/1993 discloses a further vehicular navigation system. When the toll office number of a telephone number is inputted (as in a toll office inputting mode), the toll office number data in a memory and the map data of the area corresponding to the toll office number data are based to display in a display unit the map of the area, to which is assigned the toll office number of the inputted telephone number. Upon inputting a destination, the operator is conveniently enabled to display a map containing the destination merely by knowing the toll office number of the telephone number of the destination even if he does not remember the accurate position or address of the target. In this vehicular navigation system, when the telephone number is inputted (as in a telephone number inputting mode), the telephone number data in the memory and the map data corresponding to the telephone number data are based to display in the display unit the map around the point corresponding to the inputted telephone number so that the operator may conveniently set and input the destination.

In such vehicular navigation system of the prior art, however, even the registered point, which has been repeatedly set many times as the destination, for example, has to be selected two times. Specifically, a predetermined genre is once selected at first in the menu hierarchy of genres, and the menu of the registered points belonging to the genre is displayed. A menu of a desired registered point is further selected from the former menu. Thus, the vehicular navigation system has a problem in its troublesome operations.

If a destination is selected in the toll office number inputting mode of the aforementioned example of the prior art, however, what is displayed is the map covering a wide range indicating the area to which is assigned the inputted toll office number, to raise a problem that it is not easy to locate the position of the desired point from such map covering the wide range. Even if the position of the desired point is located from the wide range map, there arises another problem that it frequently takes complicated operations and serious troubles by switching the map to a detailed map having a high reduction scale and by repeating the scrolling of the map screen to confirm the desired position on the map of the display unit even if the position of the desired point is located.

In the telephone number inputting mode of the aforementioned example of the prior art, moreover, the position corresponding to the telephone number inputted on the basis of the telephone number data and the position data stored in the memory is retrieved and displayed in the display unit. In case, therefore, the telephone number failing to be stored as the telephone number data in the memory is inputted, the position corresponding to the telephone number cannot be retrieved. In this case, there arises another problem that the map around the position corresponding to the inputted telephone number cannot be displayed in the display unit.

A general problem in the vehicular navigation system is the frequent use of a display unit which has such a small screen as can be arranged in a space-limited compartment. In case, therefore, a number of menus of registered points are prepared, they are enumerated and displayed over a plurality of screens, which are switched as a screen switching instruction is inputted. As a result, after the menu of the genre is selected to display the menu of the registered points, the menu of the desired registered point is searched from the menu of all the registered points. This makes it frequently necessary to input the screen switching instruction many times to switch the screens. In this case, there arises a problem that the operations are also troublesome.

IBM Technical Disclosure Bulletin, vol. no. 2B, New York, US, pages 349-350, Anonymous, "Reorganizing menu hierarchy to best fit the individual user" relates to an operating system which, prior to display hierarchy menu, executes various functions. When a user wants to perform a certain function from a sub-menu, the system adds said function to the current menu. Examples describe the addition of a part of lower menus (sub-menu) to an upper menu in order to make the user selecting the menu sooner. In particular, Example 3 describes an example of an operating system having a cascading list which can be hierarchically selected. The system recognizes when the user frequently requests a specific cascading sub-list. The system learns what the user does and adds the choice from the cascading sub-list to the previous list. The document describes the displaying of menus of an upper hierarchy upon menus of a lower hierarchy being added. However, it does not concretely describe which condition and which menu of the lower hierarchy is to be selected prior to being displayed.

EP-A-0 323 230 discloses a vehicular navigation apparatus which describes a position input system to input a position such as a destination, etc. According to this document, a destination list stored in a memory unit has data of the stored destination which enables to select a genre hierarchically when selecting the destination. The document is an example for a basic display of menus of a navigation apparatus. However, it does not disclose a point where menus of a lower hierarchy are merged into menus of the upper hierarchy prior to being displayed.

The invention conceived in view of the aforementioned problems has an object to improve the efficiency of menu selecting operations by displaying in a display unit not only a menu of a predetermined hierarchy but also at least one of the menus of a lower hierarchy corresponding to the former menu.

Moreover, the invention has an object to make the menu selecting operations efficient by determining the menu of the lower hierarchy to be displayed in the display unit together with the menu of a predetermined hierarchy, on the basis of the learning result of the preceding menu selection.

It is another object to provide a vehicular guidance information outputting system which has its operating efficiency improved when a hierarchical menu is to be selected, by displaying in the display unit not only the menu of a predetermined hierarchy but also at least one of the menus of a lower hierarchy corresponding to the former menu.

These objects are solved with the features of the claims.

According to the invention as set forth in Claim 1, for example, the second control means displays the menu in the display unit on the basis of the data stored in the storage unit. In the presence of a next hierarchical menu corresponding to the menu selected by each select instruction inputted from the input means, the third control means controls the second control means on the basis of the inputted select instruction, to display the next hierarchical menu in the display unit. In the absence of said next hierarchical menu, the third control means inputs an instruction corresponding to the menu selected by the select instruction, to the first control means on the basis of the data which is stored in the storage unit.

At this time, on the basis of predetermined information, the fourth control means controls the second control means to display in the display unit not only a menu in a predetermined hierarchy being displayed in the display unit but also at least one of a plurality of menus in a lower hierarchy corresponding to the former menu. In case, therefore, there is selected the menu of the lower hierarchy being displayed together with the menu of the predetermined hierarchy, a menu of a next hierarchy, if any, as corresponding to the menu of the next hierarchy selected can be displayed. Otherwise, an instruction corresponding to the menu of the lower hierarchy selected can be inputted so that the operation to select the menu or the like of the predetermined hierarchy can be omitted to improve the efficiency of the menu selecting operation. Moreover, a representative one of the menus of the lower hierarchy can be displayed together with the menu of the predetermined hierarchy. Then, with the menu of the predetermined hierarchy being displayed, the content of the lower hierarchy can be roughly recognized to increase the information volume providing basis for judging the menu selection thereby to make the menu selection convenient.

According to the invention as set forth in Claim 2, in the invention as set forth in Claim 1, the learning means learns, each time when any of the plurality of menus in the lower hierarchy corresponding to the menu of the predetermined hierarchy is selected by inputting the select instruction from the input means, the menu which is selected by the inputted select instruction. On the basis of the learning result, moreover, the fourth control means controls the second control means to display in the display unit not only the menu in the predetermined hierarchy being displayed but also at least one of the plurality of menus in the lower hierarchy corresponding to the former menu. As a result, the menu of the lower hierarchy to be displayed together with the menu of the predetermined hierarchy reflects the past selection result so that the efficiency of the menu selection efficiency can be further improved.

According to the invention as set forth in Claim 3, moreover, first of all, a menu is displayed in the display unit on the basis of the data stored in the storage unit. Then, in the presence of a next hierarchical menu corresponding to the menu selected by each select instruction inputted from the input means, the next hierarchical menu is displayed in the display unit on the basis of the data stored in the storage unit. In the absence of said next hierarchical menu, on the other hand, an instruction corresponding to the menu selected by the inputted select instruction is inputted to the control unit on the basis of the data stored in the storage unit.
At this time, not only a menu in a predetermined hierarchy being displayed in the display unit but also at least one of a plurality of menus in a lower hierarchy corresponding to the former menu is displayed in the display unit on the basis of the predetermined information and the data stored in the storage unit. As in the aforementioned case of the invention as set forth in Claim 1, therefore, in case the menu of the lower hierarchy to be displayed together with the menu of the predetermined hierarchy is selected, the operation to select the menu or the like of the predetermined hierarchy can be omitted to improve the efficiency of the menu selecting operation.

According to the invention as set forth in Claim 4, in the invention as set forth in Claim 3, each time any of the plurality of menus in the lower hierarchy corresponding to the menu of the predetermined hierarchy is selected by inputting the select instruction from the input means, the menu, which is selected by the select instruction is learned. On the basis of the learning result and the data stored in the storage unit, not only the menu in the predetermined hierar chy being displayed but also at least one of the plurality of menus in the lower hierarchy corresponding to the former menu is displayed in the display unit. As a result, as in the case of the aforementioned invention as set forth in Claim 2, the menu of the lower hierarchy to be displayed together with the menu of the predetermined hierarchy reflects the past selection result so that the efficiency of the menu selection efficiency can be further improved.

In addition, according to the invention as set forth in Claim 5, the vehicular guidance information outputting system can achieve effects similar to those of the aforementioned invention as set forth in Claim 1. Generally speaking, the vehicular guidance information outputting system frequently uses a small-sized display unit, which cannot display all the numerous menus belonging to the same hierarchy, so that the operation to switch a plurality of screens is required for displaying all those menus. Therefore, the invention as set forth in Claim 5 is constructed by incorporating the instruction inputting unit by the hierarchical menu selection as set forth in Claim 1 into the vehicular guidance information outputting system. As a result, not only the menu of the predetermined hierarchy but also at least one of the plurality of menus of the lower hierarchy corresponding to the former menu is displayed in the display unit. In case the menu of the lower hierarchy to be displayed together with the menu of the predetermined hierarchy is to be selected, not only the operation to select the menu of the predetermined hierarchy but also the operation of switching the screens for searching the desired menu from all the menus of the same lower hierarchy can be omitted to improve the efficiency of the menu selecting operation remarkably.

The subject matter of the present invention will become better understood in connection with the accompanying drawings.

### [Fig. 1]

A block diagram showing an example of the construction of the invention as set forth in Claim 1.

### [Fig. 2]

A block diagram exemplifying another construction of a navigation system.

### [Fig. 3]

A block diagram exemplifying still another construction of a navigation system.

### [Fig. 4]

A block diagram showing the entire construction of the navigation system 10 according to the first and second embodiments.

### [Fig. 5]

An explanatory diagram presenting a portion (A) of the appearance of the navigation system 10 and an example (B) of the main menu screen to be displayed in the display 22a by starting the destination setting steps 1 and 2.

### [Fig. 6]

A schematic diagram schematically showing the content of a portion of the registered point data stored in the external storage unit 18.

### [Fig. 7]

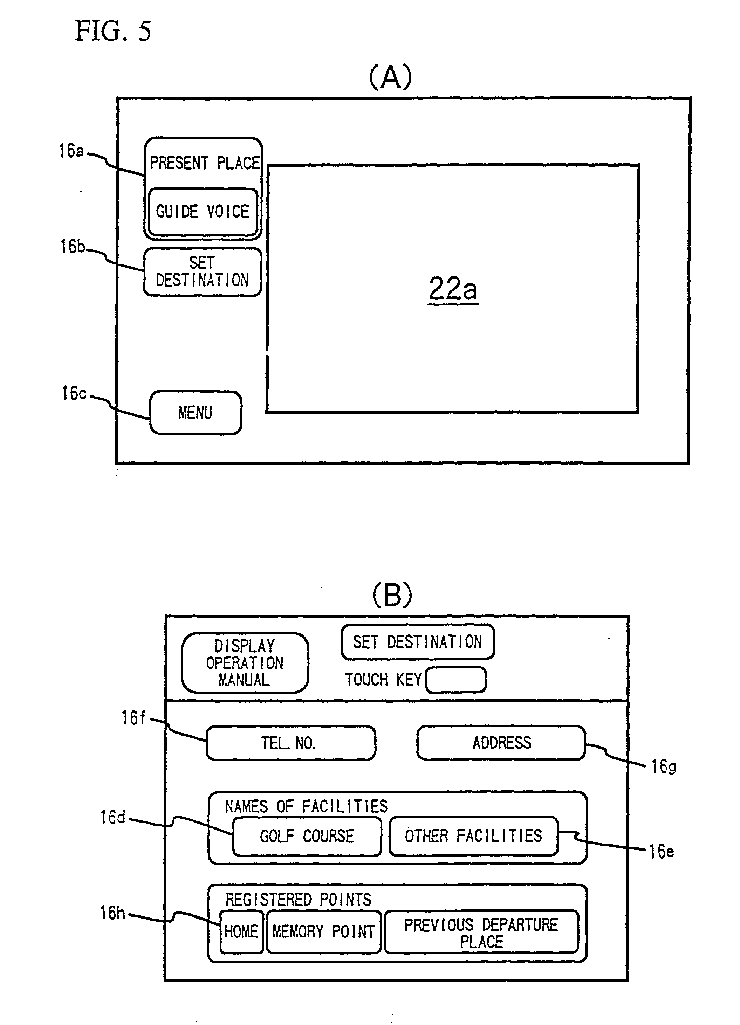

An explanatory diagram presenting an example (A) of the screen of the case, in which the menu "GOLF COURSE" is selected as the first genre menu 16d in the screen example of Fig. 5(B), and an example (B) of the screen of the case, in which the menu "GOLF COURSES OF AICHI" is selected in the screen example (A).

### [Fig. 8]

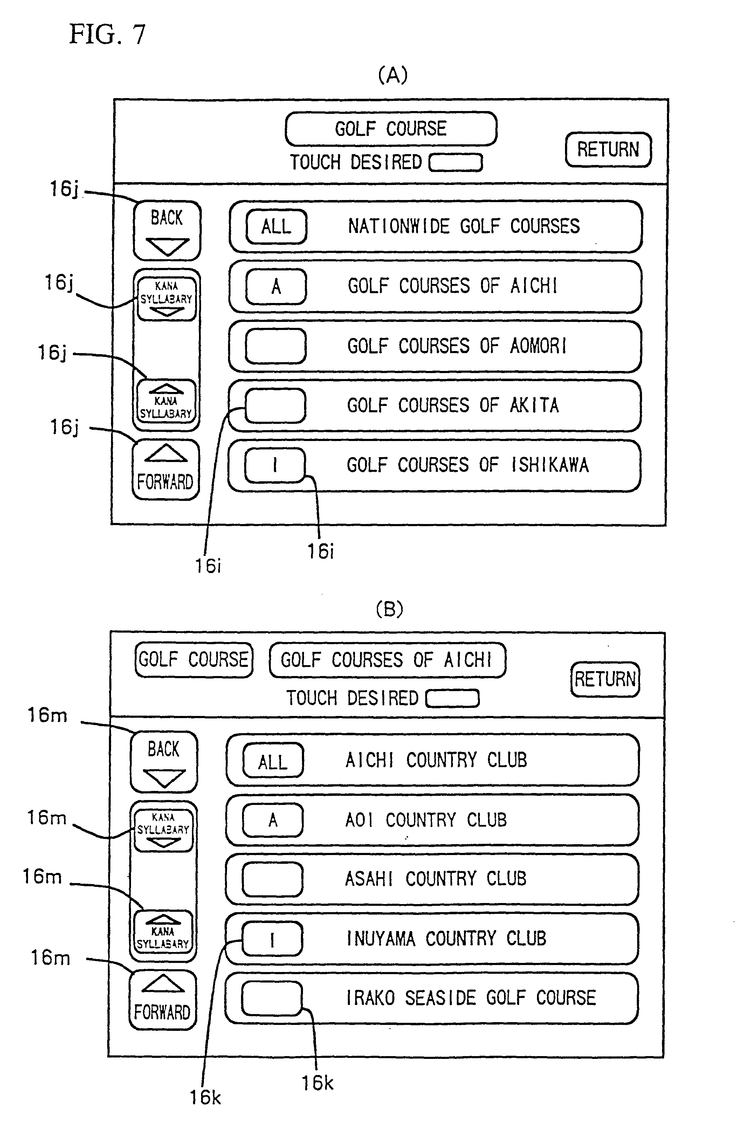

An explanatory diagram presenting an example (A) of the screen of the case, in which the menu "AICHI CC" is selected in the screen example of Fig. 7(B), and an example (B) of the screen of the case, in which the other facilities menu 16e is selected in the screen example of Fig. 5(B).

### [Fig. 9]

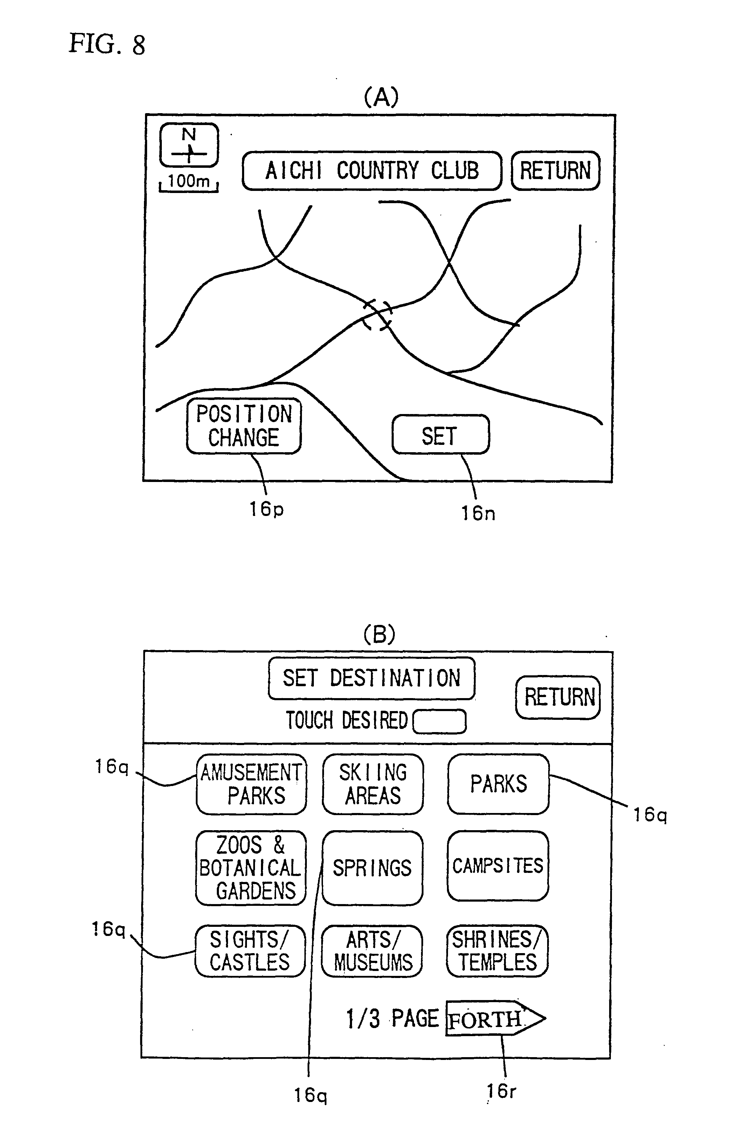

An explanatory diagram presenting an example (A) of the screen of the case, in which the page scrolling key 16r is operated in the screen example of Fig. 8(B), and an example (B) of the screen of the case, in which the page scrolling key 16r, as indicated by "FORTH", is operated in the screen example (A).

### [Fig. 10]

A flow chart showing the destination setting step 1.

### [Fig. 11]

A flow chart showing the page scrolling step.

### [Fig. 12]

A flow chart showing a portion of the destination setting step 2.

### [Fig. 13]

A flow chart showing a portion of the destination setting step 2.

### [Fig. 14]

A schematic diagram schematically showing a toll/local office number list, a subscriber's number list, a landmark genre list and a landmark point list, as stored in an external storage unit 18.

### [Fig. 15]

A flow chart showing a series of steps to be executed at a control section 24.

### [Fig. 16]

A flow chart showing a destination setting step by a telephone number inputting for setting a destination by inputting a telephone number.

### [Fig. 17]

A flow chart showing a neighbourhood retrieving step to be executed, in case the inputted telephone number is an unregistered one, for enumerating and displaying landmarks and for displaying a map around a selected landmark.

### [Fig. 18]

An explanatory diagram showing a screen (A) displaying a ten-key 16s or the like in the display 22a at step S312 and a screen example (B) displaying in the display 22a a message or the like implying that the position of the telephone of the inputted telephone number is retrieved at step S320.

### [Fig. 19]

An explanatory diagram showing a screen example (A) displaying in the display 22a a map or the like around the position of the telephone of the inputted telephone number retrieved at step S320 and a screen example (B) displaying in the display 22a a message or the like implying that the position of the telephone of the inputted telephone number is not retrieved at step S326.

### [Fig. 20]

An explanatory diagram showing a screen example (A) displaying in the display 22a a map or the like around a representative point in the assigned area of the input office number at step S326 and a screen example (B) displaying in the display 22a genre keys 16x or the like having genre names enclosed by individual rectangles at step S352.

### [Fig. 21]

An explanatory diagram showing a screen example (A) enumerating and displaying the names of landmarks or the like in the display 22a at step S356 and a screen example (B) displaying in the display 22a a map or the like around the position of the selected landmark at step S364.

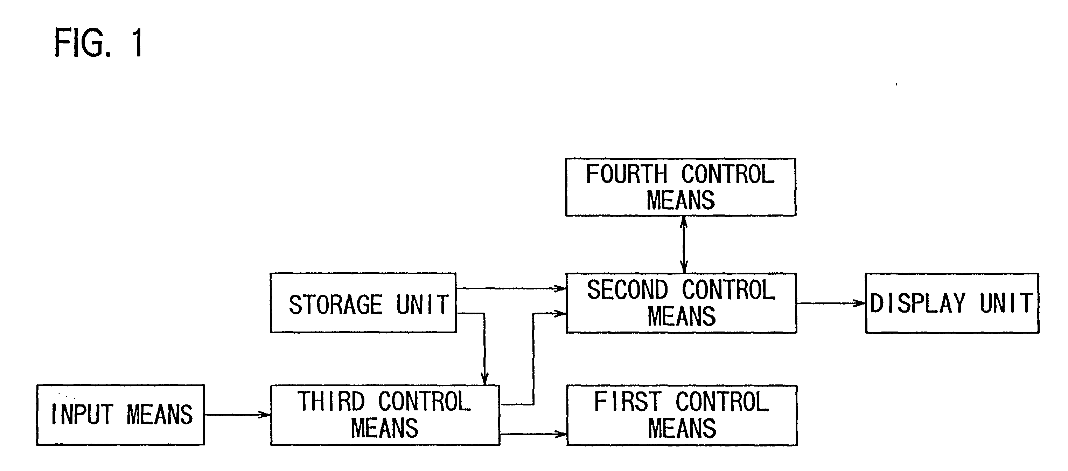

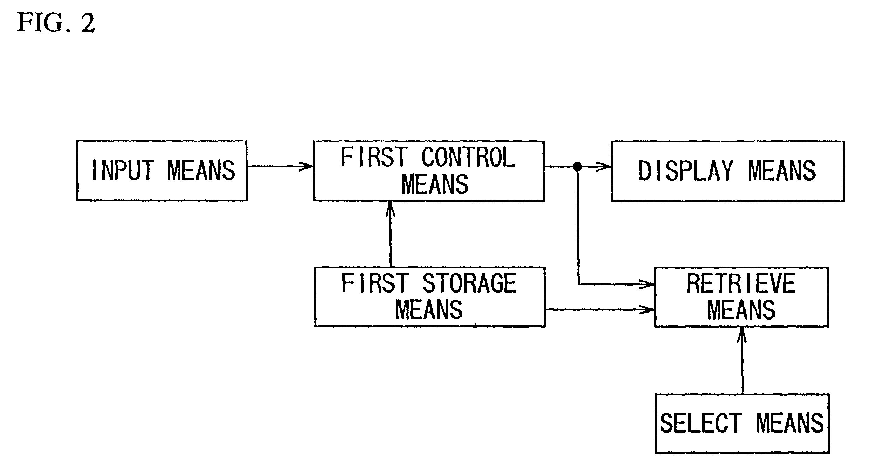

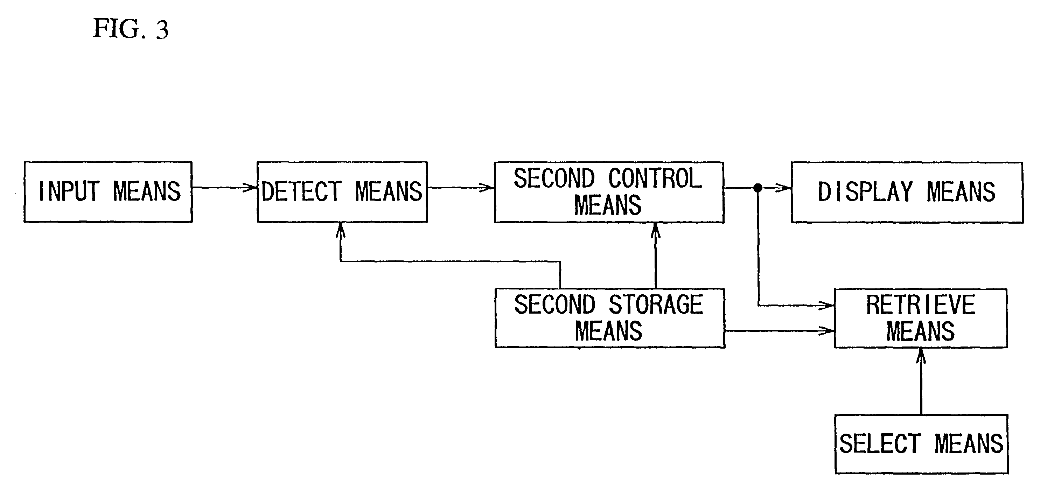

A first embodiment of the present invention will be described in detail in connection with reference to Figs. 1 to 11. However, the present invention should not be limited to the following embodiments to be detailed but can contain all the embodiments that can be conceived by those skilled in the art, without departing the gist thereof.

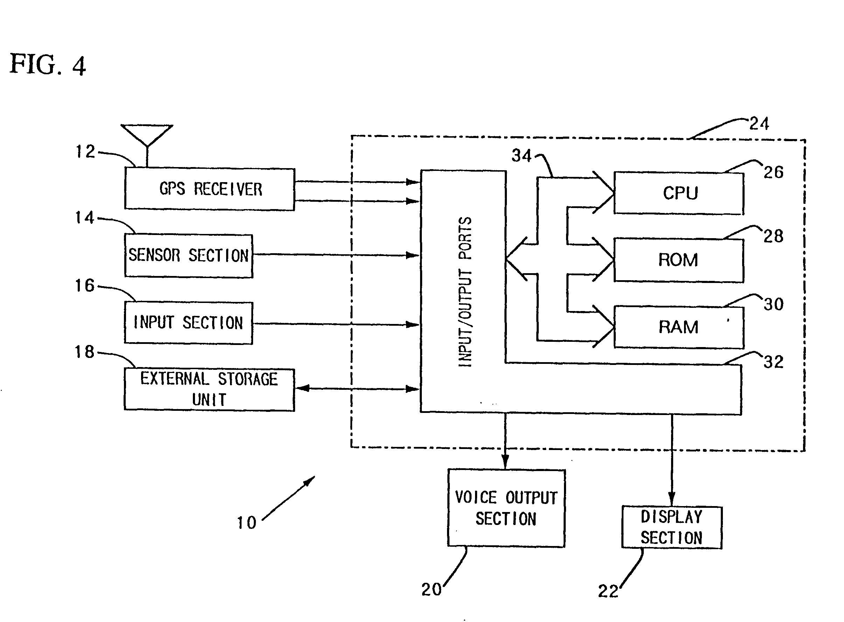

A navigation system 10 according to the present embodiments has its entire construction shown in a block diagram in Fig. 4. The navigation system 10 is mounted on a vehicle guiding the running vehicle from a departure or present place to a desired destination of the user by searching the optimum route from the de parture or present place to the destination to display a proper guidance together with the map and to suitably output a voice guidance.

A portion of the navigation system 10 is so disposed at the central portion above the dashboard in the vehicle compartment as can be easily seen from either the driver's seat or the navigator's seat, as shown in Fig. 5(A).

As shown in Figs. 4 and 5(A), the navigation system 10 is constructed to include: a well-known GPS receiver 12 for receiving the electric waves transmitted from an artificial satellite (NAVSTAR) for the GPS (Global Positioning System) to transform and demodulate the frequencies of the received signals thereby to calculate the latitude data, longitude data and level data indicating the position of the receiving point (i.e., the present position) and to calculate the velocity data indicating the moving velocity of the receiving point (i.e., the running velocity of the vehicle) and the azimuth data indicating the moving azimuth; a sensor section 14 composed of a distance sensor for detecting the running distance of the vehicle, a velocity sensor for detecting the running velocity of the vehicle and a relative azimuth sensor such as a gyro or a lefthand/righthand wheel sensor for detecting the relative azimuth of the vehicle, to detect the present position of the vehicle by outputting values individually according to the running distance, running velocity and advancing direction of the vehicle; an input section 16 composed of button type switches or touch switches for the operator to set the departure place or destination or for switching the display screen by inputting various instructions; an external storage unit 18 composed of a CD-ROM disc acting as a storage medium stored with various data in advance, and a CD-ROM drive for reading the data from the disc; a voice output section 20 composed of a speaker for outputting a voice guidance or various message sounds, a voice processor for synthesizing the voice to be outputted from the speaker, and an D/A converter; a display section 22 composed of a display 22a such as a CRT or LCD and a display control circuit for displaying the image on the display 22a to display the road map or the various messages; and a control unit 24 for reading suitable data from the GPS receiver 12, the sensor section 14, the input section 16 and the external storage unit 18 to drive and control the voice output section 20 and the display section 22 on the basis of the data.

Here, the display section 22 functions as the display unit forming a component of the invention as set forth in Claim 1 and as the display unit forming part of the system of the invention as set forth in Claim 3. Moreover, the external storage unit 18 functions as the storage unit forming a component of the invention as set forth in Claim 1 and as the storage unit forming part of the system of the invention as set forth in Claim 3.

As shown in Fig. 4, moreover, the control section 24 is constructed as a well-known microcomputer which is equipped with a CPU 26, a ROM 28, a RAM 30, input/output ports 32 and a bus line 34 connecting those portions and functions as the control unit forming part of the system of the invention as set forth in Claim 3. Incidentally, the RAM 30 has its portion constructed of such a well-known backup RAM as will not have its written data lost even if the navigation system 10 is turned OFF.

On the other hand, the button type switches belonging to the input section 16 are composed, as shown in Fig. 5(A), of: a present place switch 16a arranged at the side of the display 22a for displaying the present place together with the map in the display 22a or for outputting the guidance from the voice output section 20; a destination setting switch 16b for starting the (later-described) destination setting process by the control unit 24; and a menu switch 16c for displaying the menu screen in the display 22a.

Moreover, the touch switches of the input section 16 are formed on the screen of the display 22a in such positions as to be visually recognized as rectangular keys and are given the well-known construction in which their positions and functions are changed according to the change in the display of the display screen. All the later-described menus are displayed in the form of touch switches 16d, 16e, 16f, 16g, 16h and 16q (as shown in Fig. 5(B), Fig. 8(B) and Fig. 9) or together with touch switches 16i and 16k (as shown in Fig. 7) in the display 22a. As a result, each of the menus is selected by touching the corresponding touch switch. Each touch switch for selecting the corresponding menu functions as the input means. Incidentally, in the following description, the reference characters for indicating the menus displayed as the touch switches are designated for description by those identical to the reference characters indicating the touch switches.

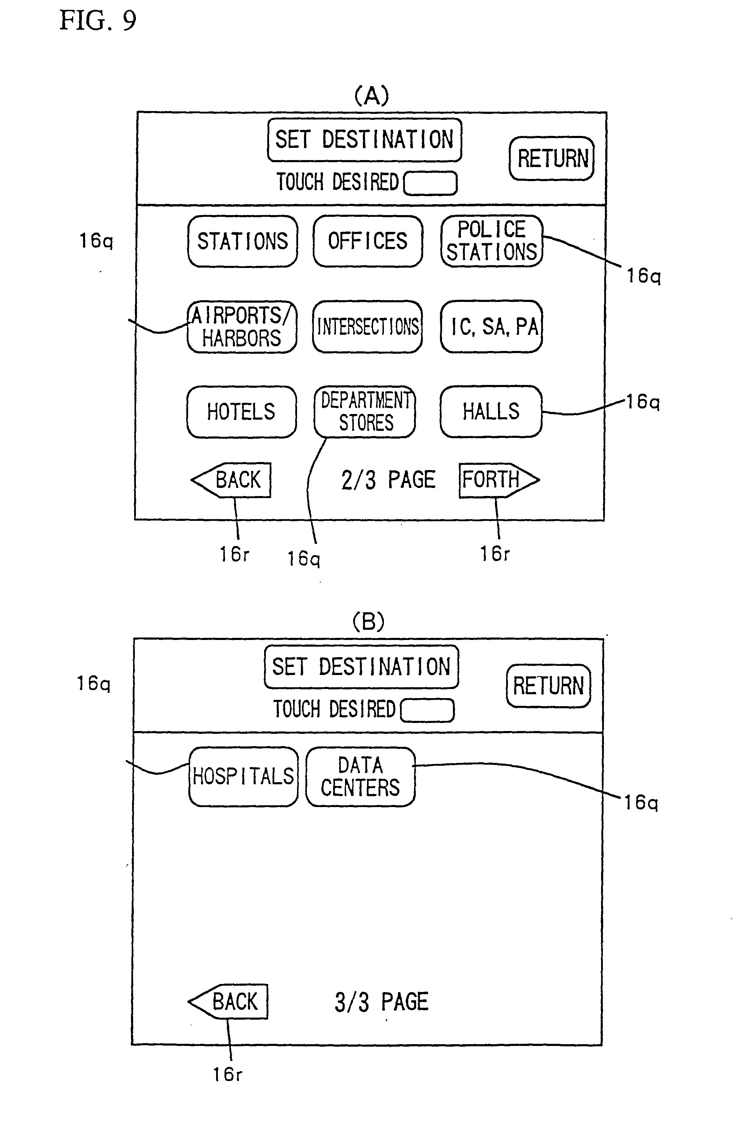

Moreover, the CD-ROM disc (as will be shortly referred to as the "disc") acting as the storage medium of the external storage unit 18 is stored with: map data for displaying a map in the display 22a; intersection data indicating the position of an intersection; road data indicating information on a road intersecting one intersection and another intersection; node data indicating the position of each point on the road; and address data indicating information on the address of each point, in addition registered point data composed of information on the registered points which are registered in advance and classified into predetermined genres; and a toll/local office No. list indicating the information on all the toll and local numbers of the telephone numbers; a subscriber's No. list indicating the information on a subscriber's No. of the registered telephone number or the stored telephone number; a landmark genre list indicating the information on the genre of a landmark existing in the area to which is assigned the office number of the telephone number; and a landmark point list indicating the information on the landmark point. Here, the genre indicates a classification convenient for the operator to search a desired destination, and is classified into "AMUSEMENT PARKS", "STATIONS" AND "HOSPITALS", as exemplified in Figs. 8(B) and 9. On the other hand, the landmark implies the geographical information which is useful for the operator to search a desired point or area to reach it. In the present embodiment, the names of the points or areas are classified into the four genres of intersections, stations, offices and town's names.

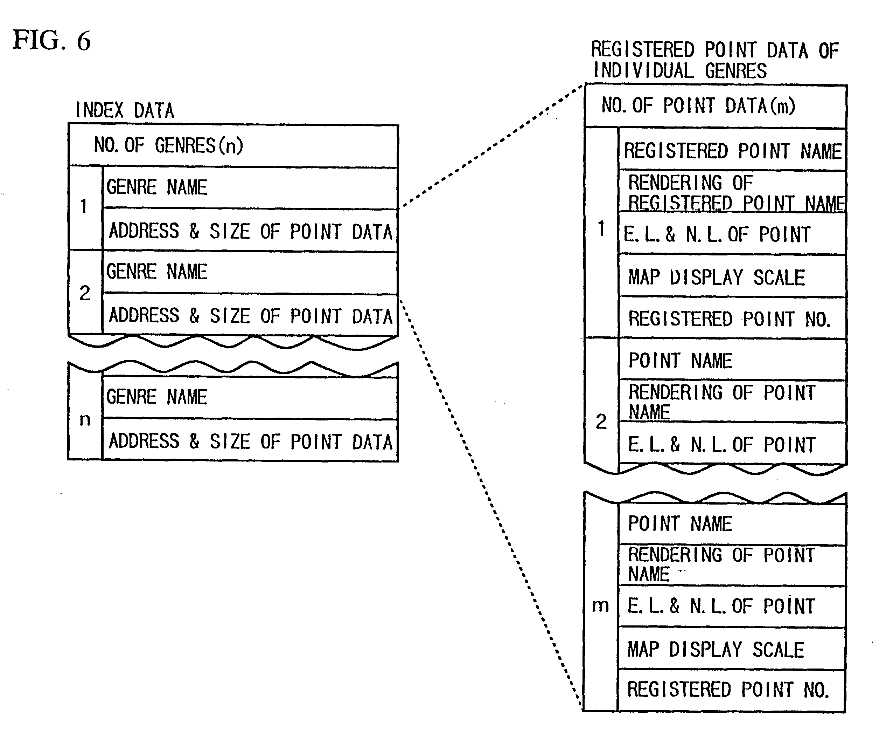

The registered point data are constructed (as shown in Fig. 6) of: index data for retrieving the later-described registered point data for each genre, as classified for each genre while displaying the genre names as the menu in the display 22a; and registered point data for each genre for retrieving the map data for displaying a map around each registered point while displaying each registered point name as the menu in the display 22a.

Of those data, the index data have their minimum unit data group composed of: genre name data indicating the name of each genre; and point data address & size data indicating the starting point of the address on the disc, which is stored with the data group set (as shown in Fig. 6) of the registered point data for each genre relating to all the registered points classified into that genre, and the storage capacity of the same. Such minimum unit data groups are gathered in an n number or the number of all genres to constitute the entirety of the index data (as shown in Fig. 6).

The registered point data for each genre have their minimum unit data group composed of: registered point name data indicating a specific name (e.g., "TORANOMON INTERSECTION" in the genre "INTERSECTION") of a registered point; registered point name rendering data indicating the rendering of a registered point name so as to enumerate and display the names of the registered points in the KANA syllabic order (as shown in Fig. 7(B)), as will be described hereinafter; point E.L. & N.L. data indicating the position of the registered point; map display scale data indicating the reduction scale in case a map around the point position in a reduced scale; and registered point number data indicating a registered number for reading out more detailed information on the registered point from other data. Moreover, these minimum unit data groups are individually given (although not shown) predetermined attribute data for each prefecture, in which the registered point exists, so that the menu for each prefecture can be displayed, as exemplified in Fig. 7(A).

Of these minimum unit data groups, moreover, a plurality of data groups relating to the registered points classified into the same genre are gathered to form a set of data groups consecutive on the address of the disc (the data group set composed of an m number of data groups is exemplified in Fig. 6), and such data groups sets are gathered in the n number to constitute the entirety of the registered point data of each genre.

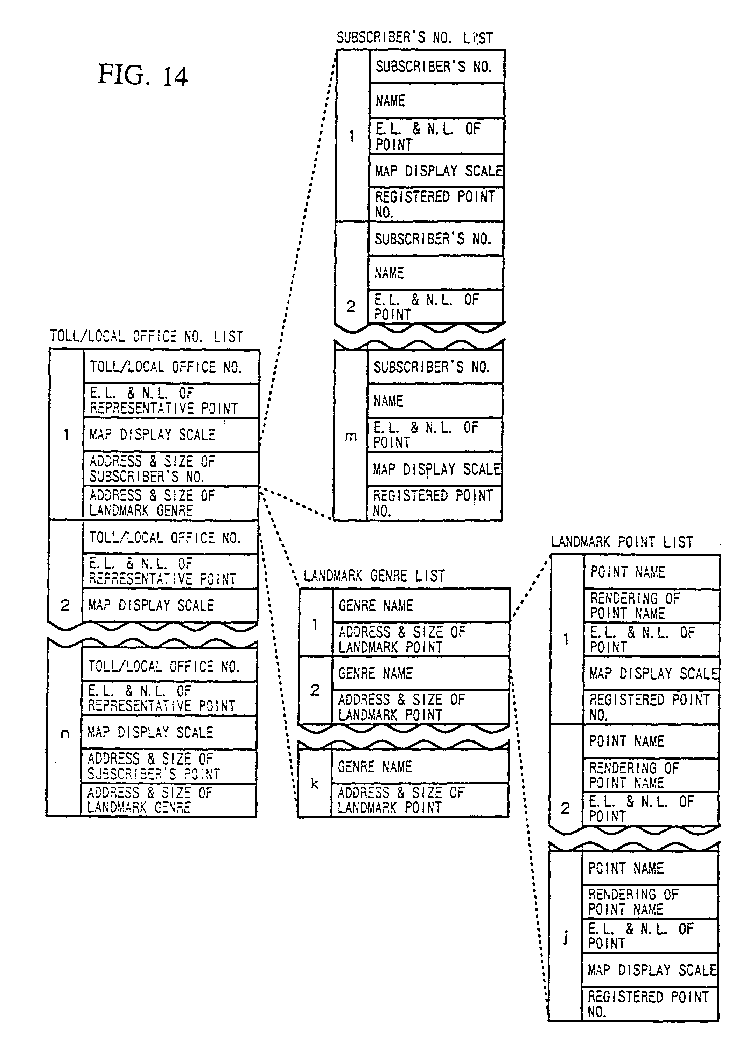

In comparison, the toll/local office No. list has its minimum unit data groups composed, as shown in Fig. 14, of: toll/local office number data indicating the toll/local office numbers; representative point E.L. & N.L. data indicating the position of a representative point in the area assigned to the office number; map display scale data indicating the reduction scale of the case, in which the map around the representative point is to be displayed; address & size data of subscriber's No. for indicating the starting point of the address, at which a set of data groups of the subscriber's number list of the registered telephone numbers having the office number on the subscriber's number is stored, and the storage capacity; and address & size data of landmark genre for indicating the starting point of the address, at which a set of the data groups of the landmark genre list on the genre of the landmark existing in the area assigned to the office number is stored, and the storage capacity. Such minimum unit data groups are gathered in an n number or the total of the nationwide toll/local office numbers to constitute the entirety of the toll/local office No. list.

The subscriber's No. list has its minimum unit data groups composed, as shown in Fig. 14, of: subscriber's number data indicating the subscriber's number in the registered telephone numbers; name data indicating the name of the owner of the registered telephone number; point E.L. & N.L. data indicating the position in which the telephone of the registered telephone number exists; map display scale data indicating the reduction scale in case the map around that location is to be displayed; and registered point No. data indicating the registered number for reading the more detailed information of that location from other data. Here, the point E.L. % N.L. data imply a point position information and the subscriber's No. data imply a relation information together with the aforementioned toll/local office No. data and subscriber's No. address & size data. Of these minimum unit data groups, moreover, a plurality of data groups belonging to a toll/local office number are gathered to form a set of data groups consecutive on the address of the recording medium of the external storage unit 18 (the data group set composed of an m number of data groups is exemplified in Fig. 14), and such data groups sets are gathered in the n number to constitute the entirety of the subscriber's No. list.

On the other hand, the landmark genre list has its minimum unit data groups composed, as shown in Fig. 14, of: genre name data indicating the genre name of the landmark which exists in the assigned area of the corresponding toll/local office number; and landmark point address & size data indicating the starting point of an address, at which the data group set of the later-described landmark point list relating to the landmark existing in that area and classified into the genre is stored, and the storage capacity. Here, the landmark point address & size data imply the corresponding information together with the aforementioned toll/local office number data and the landmark genre address & size data. Of these minimum unit data groups, moreover, a plurality of data groups relating to all the landmark genre existing in the assigned area of the same toll/local office number are gathered to form a set of data groups consecutive on the address of the recording medium of the external storage unit 18 (the data group set composed of an k number of data groups is exemplified in Fig. 14), and such data groups sets are gathered in the n number to constitute the entirety of the landmark list.

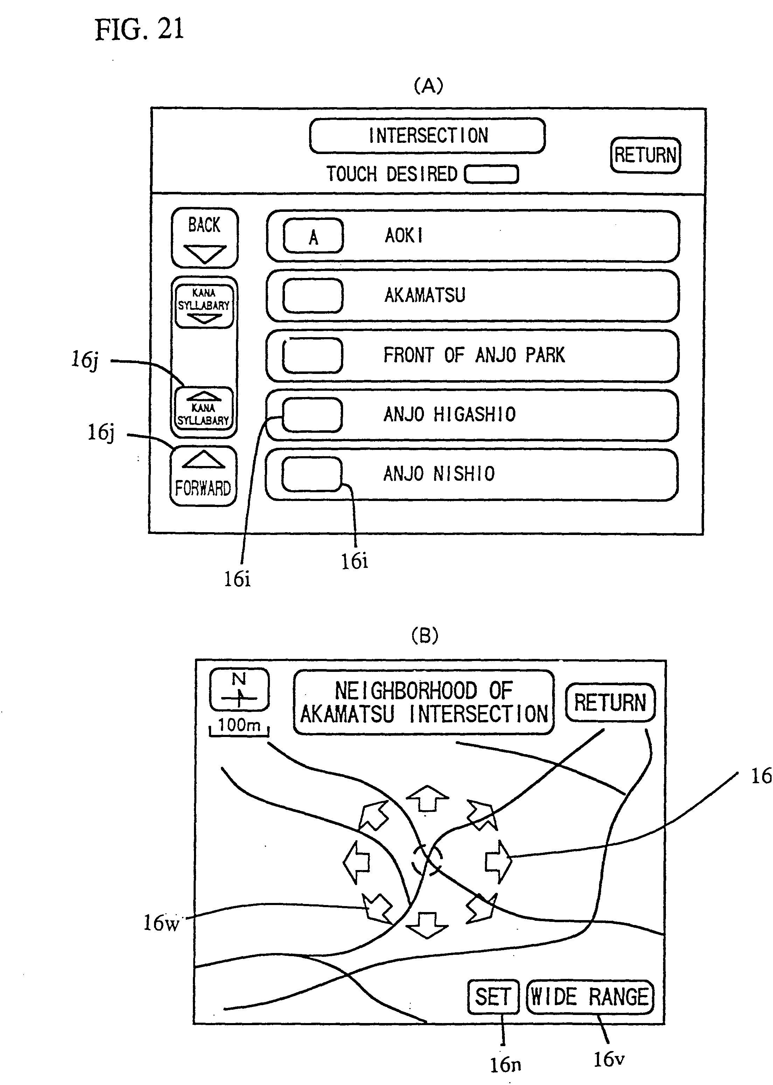

Additionally, the landmark point list has its minimum unit data groups composed, as shown in Fig. 14, of: point name data indicating the specific name of a landmark (e.g., "TORANOMON" in case the genre covers intersections); point name rendering data indicating the Japanese rendering of the name of the landmark for enumerate and display the landmark name in the KANA syllabary (as shown in Fig. 21(A)), as will be described hereinafter; point E.L. & N.L. data used as the landmark position information indicating the location of the landmark; map display scale data indicating the reduction scale in case the map around the location is to be displayed; and registered point No. data indicating the registered number for reading more detailed information relating to that point from other data.

Of these minimum unit data groups, moreover, a plurality of data groups relating to the landmark existing in the assigned area of the same office number and classified into the same genre are gathered to form a set of data groups consecutive on the address of the recording medium of the external storage unit 18 (the data group set composed of a j number of data groups is exemplified in Fig. 14), and such data groups sets are gathered in the (n x k) number to constitute the entirety of the landmark point list.

Incidentally, here will be summarized a destination setting step 1 (as shown in Figs. 10 and 11) which is executed in the control section 24 by operating the destination setting switch 16b to read out the aforementioned registered point data or the like from the disc and to hierarchically display the menu in the display 22a so that the operator may be able to set the destination point easily. The major steps to be firstly executed by the control section 24 on the basis of the various data stored in the aforementioned external storage unit 18 are coarsely classified, as shown in Fig. 15, into a present position setting step S302, a destination setting step S310, a route searching step S380 and a guidance displaying step S390.

Of these steps, the present position setting step S302 is one for clearing a reference place for guiding the run of the vehicle by presetting the present position as the departure point of the vehicle before the run and is started by turning ON the power supply of the navigation system 10 in accordance with the engine start of the vehicle. At this step S302, the (not-shown) initial screen is displayed at first on the display 22a so that the present position of the vehicle can be set by the operations simultaneously similar to those of the later-described destination setting step S310. When this step S302 is ended, the map around the set present position is displayed on the display 22a to establish a state awaiting the operations by the operator.

Incidentally, once the present position is set, the map around the present position read out from the back-up RAM forming part of the RAM 30 can be displayed automatically without inputting any instruction from the outside, when the power supply of the navigation system 10 is turned ON again. This is because the present position immediately before the ON of the power supply of the navigation system 10 is stored in the back-up RAM.

On the other hand, the destination setting step S310 is one for setting the destination of the vehicle run, as will be described in detail hereinafter.
Moreover, the route searching step S380 is one for searching the optimum route between the present position or the departure place set at the steps S302 and S310 and the destination, and the guide displaying step S390 is one for executing the guidance according to the vehicle run along the optimum route searched by step S380, by displaying the map and the present position in the display 22a and the suitable guidance information and by outputting the voice guidance from the voice output section 20.

On the other hand, the destination setting step S310 is started by operating the destination setting switch 16b, as shown in Fig. 5(A). When this step is executed, the touch panel, as shown in Fig. 5(B), is displayed at first in the display 22a so that the home or previous departure place already registered can be set as the destination by touching the touch switches having their individual letters enclosed by rectangles and so that the golf course or other facilities can be set as the destination by enumerating and displaying them and by touching the individual touch switches to select them. Moreover, the desired destination can be set on the basis of inputting its address or telephone number.

Specifically, first of all, the main menu, as exemplified in Fig. 5(B), is displayed in the display 22a. When the first genre menu (e.g., the "GOLF COURSE" in the example of Fig. 5(B)) displayed in the column of the names of facilities of the main menu is selected, the nationwide and prefecture menus, as exemplified in Fig. 7(A), are instantly displayed for the first genre menu 16d selected. When the nationwide or any prefecture menu is selected, the menus of the registered point names of the first genre existing in the prefecture (or nationwide) of the selected menu are enumerated and displayed (Fig. 7(B) exemplifies the case in which the menu "GOLF COURSES OF AICHI" is selected in Fig. 7(A)). When any of the menus of those registered points is selected, the map around the registered point selected is displayed (Fig. 8(A) exemplifies the case in which the menu "AICHI CC" is selected in Fig. 7(B)) so that the registered point can be set as the destination.

On the other hand, when the other facilities menu 16e displayed in the facilities name column of the main menu is selected, the individual genre menus 16q such as "AMUSEMENT PARKS", "SKIING AREAS", "STATIONS" and "TOWN OFFICES" belonging to the same hierarchy as that of the golf courses of the first genre menu 16d are once so enumerated and displayed (as shown in Figs. 8(B) and 9) that they can be selected. When any of the genre menus 16q is selected, the nationwide and individual prefecture menus are enumerated and displayed for the selected genre menu 16q as in case the aforementioned first genre menu 16d is selected. After this, a step similar to the aforementioned one is executed for the first genre menu 16d.

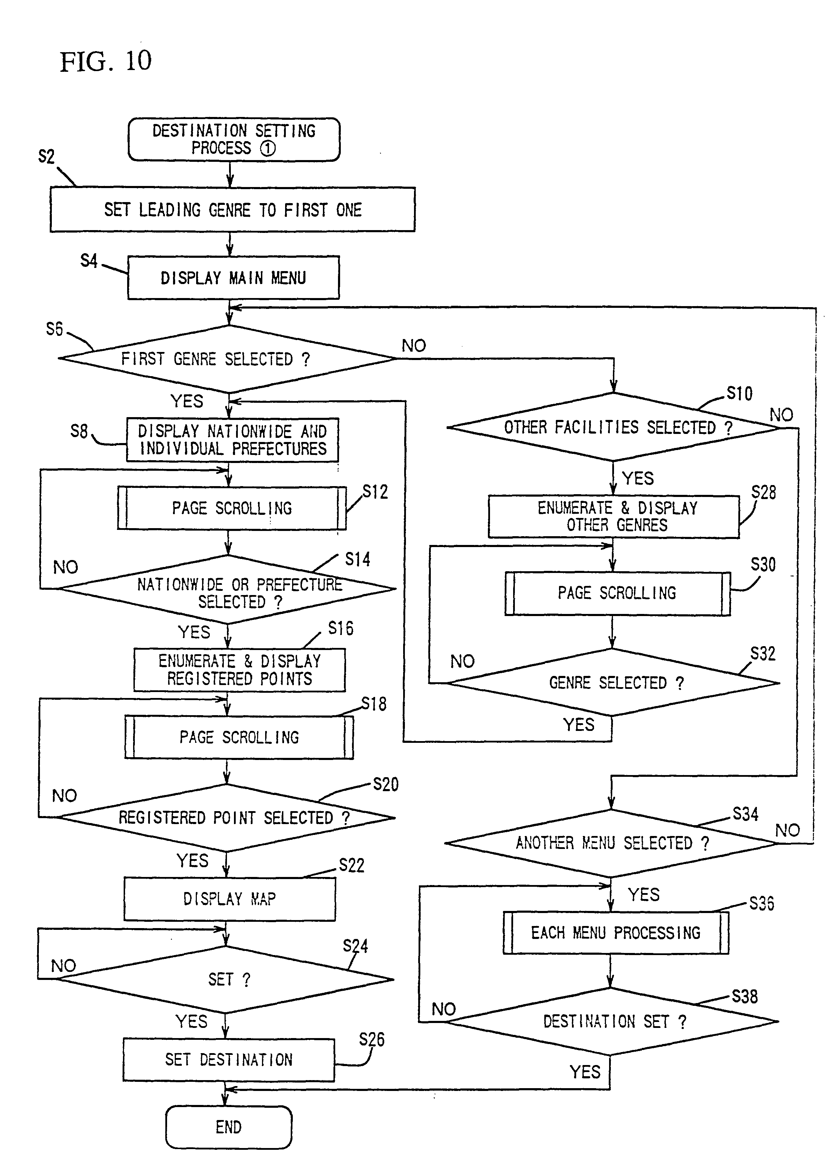

The destination setting step 1 will be described in detail in the following with reference to Figs. 10 and 11.

When the destination setting step 1 is executed, at first step S2, the leading (i.e., first) genre name data of the index data (as shown in Fig. 6) read out from the disc of the external storage unit 18 are based to set the leading genre as the first genre, and the routine advances to step S4. At this step S4, the genre name data of the leading genre read out at preceding step S2 and predetermined data stored in the disc of the external storage unit 18 are based to drive and control the display section 22 so that the main menu containing the first genre menu 16d indicating the names of the first genre, as exemplified in Fig. 5(B), is displayed in the display 22a. Here, the other facilities menu 16e forming one component of the main menu corresponds to the menu of a predetermined hierarchy relating to the invention as set forth in Claims 1 to 5, whereas the first genre menu 16d corresponds to one of the plurality of menus of a lower hierarchy corresponding to the other facilities menu 16e. By executing this step S4, the control section 24 functions as the fourth control means forming a component of the invention as set forth in Claim 1. Moreover, the first genre name data stored in the index data have a meaning of the predetermined information relating to the invention as set forth in Claim 1.

After execution of step S4, the routine advances to step S6, at which it is decided whether or not the first genre menu 16d displayed as the main menu is selected. This step S6 is affirmed if the first genre menu 16d is selected, and the routine advances to step S8. If a main menu other than the first genre menu 16d is selected, the step S6 is denied, and the routine advances to step S10.

At step S8, the predetermined data stored in the disc of the external storage unit 18 are based to drive and control the display section 22 so that the nationwide and individual prefecture menus for the first genre are enumerated and displayed in the display 22a, as exemplified in Fig 7(A), and the routine advances to step S12. Here, the individual prefecture menus are enumerated and displayed in the KANA syllabic order at the back of the nationwide menu displayed at the head, so that the select keys 16i dis played and formed sideways of the individual menus can be operated to select the nationwide and individual prefecture menus corresponding to the select keys 16i operated. In case, on the other hand, the page scroll keys 16j displayed and formed at the lefthand side of the screen of the display 22a, as exemplified in Fig. 7(A), are operated, the screen can be switched to further enumerate and display the individual prefecture menus, which were not displayed in the just preceding screen, in the KANA syllabic order.

In the page scrolling step to be executed at step S12 subsequent to step S8, as shown in Fig. 11, it is decided at first step S80 whether or not the page scrolling key 16j is operated. In the absence of this operation, the answer of step S80 is denied to end the page scrolling of step S12, and the routine advances to step S14. If, on the other hand, the page scrolling key 16j is operated, the answer of step S80 is affirmed, and the routine advances to step S82, at which the display screen of the display 22a is switched in response to the operation of the page scrolling key 16j. After this, the page scrolling step S12 is ended, and the routine advances to step S14.

At step S14, whether or not any prefecture or nationwide is selected is decided on the basis whether or not any of the select keys 16i is operated. If any prefecture or nationwide is selected, the step S14 is affirmed, and the routine advances to step S16. If, on the other hand, any of the select keys 16i is not operated so that neither any prefecture nor the nationwide is selected, the step S14 is denied, and the routine returns to step S12, at which the page scrolling is executed again.

At step S16, of the data group set of the registered point data of individual genres (as schematically shown by dotted lines in Fig. 6) read out from the disc of the external storage unit 18 on the basis of the point data address & size data of the first genre stored at the head of the index data, the registered point name data and the registered point name rendering data of the data group, to which are assigned the attribute data of the selected prefecture, are based to drive and control the display section 22 so that the registered point names of the first genre existing in the selected prefecture are enumerated and displayed in the KANA syllabic order in the display 22a, as exemplified in Fig. 7(B). Incidentally, in case the nationwide menu is selected, the attribute data of each prefecture are ignored, and all the registered point name data and the registered point name rendering data of the data group set of the individual genre registered point data read out from the disc of the external storage unit 18, as described above, are based to enumerate and display the nationwide registered point names of the first genre in the KANA syllabic order in the display 22a. By executing this step S16 as well as the foregoing steps S4 and S8 and the later-described step S28, the control section 24 functions as the second control means forming a component of the invention as set forth in Claim 1.

If, moreover, the select key 16k is operated with the screen of Fig. 7(B) being displayed in the display 22a, the menu corresponding to the registered point can be selected. If a page scrolling key 16m is operated, the display screen can be switched to enumerate and display the menu of another registered point. This capability is identical to the aforementioned case in which menus of the nationwide and individual prefecture are enumerated and displayed, as exemplified in Fig. 7(A).

At the page scrolling step S18 (as shown in Fig. 11) to be executed subsequent to step S16, as at the aforementioned step S12, it is decided (at step S80) whether or not the page scrolling key 16m is operated. If this key 16m is operated, the display screen of the display 22a is switched (at S82), and the routine advances to step S20. If, on the other hand, the page scrolling key 16m is not operated, the routine instantly advances to step S20.

At step S20, whether or not any of the registered points is selected is decided on the basis whether or not any of the select keys 16k is operated. If none of the registered points is selected, the step S20 is denied, and the routine returns to step S18 to execute the page scrolling step. If, on the other hand, a registered point of the menu corresponding to a select key 16k is selected by operating any select key 16k, the step S20 is affirmed, and the routine advances to step S22.

At step S22, the point E.L. & N.L. data and the map display scale data in the same data group as that of the registered point name data indicating the registered point name selected are based to retrieve the map data stored in the disc of the external storage unit 18. By driving and controlling the display section 22 on the basis of the retrieval result, the map around the registered point selected is displayed in the display 22a, as exemplified in Fig. 8(A). By executing this step S22, the control section 24 functions as the first control means forming a component of the invention as set forth in Claim 1. By additionally executing the aforementioned step S8 and step S16 and the later-described step S28, moreover, the control section 24 further functions as the third control means forming a component of the invention as set forth in Claim 1.

If, on the other hand, a set key 16n displayed in the lower side of the screen being displayed in the display 22a, as shown in Fig. 8(A), is operated, the central position of the map being displayed at the operation time can be set as the destination. If, moreover, a position changing key 16p is operated, the central position of the map being displayed at the operation time can be changed.

At step S24 subsequent to step S22, it is decided whether or not the set key 16n is operated. Without this operation, the execution is awaited till the set key 16n is operated. If, on the other hand, the set key 16n is operated, the answer of step S24 is affirmed, and the routine advances to step S26. At this step S26, the central position of the map being displayed at the operation time is set, and the destination setting step 1 is ended.

If, on the other hand, it is decided at the aforementioned step S6 that the first genre menu 16d is not selected with the main menu being displayed in the display 22a, as exemplified in Fig. 5(B), the routine advances to step S10, at which it is decided whether or not the other facilities menu 16e is selected.

If the other facilities menu 16e is selected, the answer of step S10 is affirmed, and the routine advances to step S28. If the other facilities menu 16e is not selected, on the other hand, the answer of step S10 is denied, and the routine advances to the later-described step S34.

At step S28, all the genre name data other than the leading genre name data of the index data, as shown in Fig. 6, are read out from the disc of the external storage unit 18 and are based to drive and con trol the display section 22 so that the plurality of genre menus 16q of the same hierarchy as that of the aforementioned first genre menu 16d are enumerated and displayed in the display 22a, as exemplified in Fig. 8(B).

If a page scrolling key 16r displayed and formed in the lower corner of the screen displayed in the display 22a, as exemplified in Fig. 8(B), the page (i.e., the last page for the indication "BACK") and the screen is switched to the next page for the indication "FORTH" displayed in the page scrolling key 16r so that the genre menu 16q, which is not found in the screen before switched, can be displayed in the display 22a, as exemplified in Figs. 9(A) and 9(B).

At the page scrolling step S30 subsequent to step S28, as in the case of the aforementioned page scrolling step S12, it is decided at step S80 whether or not the page scrolling step shown in Fig. 11 is executed so that the page scrolling key 16r is operated. If this operation is executed, the routine advances to step S82, at which the screen is switched to that page which is displayed in the page scrolling key 16r, so that another genre menu is displayed in the display 22a. After this, the present step is ended, and the routine advances to step S32. If, on the other hand, it is decided at step S80 that the page scrolling key 16r is not operated, the present step is instantly ended, and the routine advances to step S32.

At step S32, whether or not any genre menu 16q is selected is decided on the basis of the presence or absence of the touching operation. If any genre menu 16q is touched and selected, the answer of step S32 is affirmed, and the routine advances to the aforementioned step S8. At this step S8, the predetermined data stored in the disc of the external storage unit 18 are read to drive and control the display section 22 so that the nationwide and individual prefecture menus for the selected genre are enumerated and displayed in the display 22a as in the aforementioned case exemplified in Fig. 7(A). After this, the steps at and after S8 are subsequently executed like the case in which the aforementioned first genre menu 16d is selected. If, on the other hand, it is decided at step S32 that none of the genre menus 16q is selected, the routine returns to step S30, at which the page scrolling step is executed again.

If it is decided at the aforementioned step S10 that the other facilities menu 16e is not selected, the routine advances to step S34, at which it is decided whether or not the main menu such as the telephone number menu 16f, the address menu 16g or the home menu 16h other than the first genre menu 16d and the other facilities menu 16e is selected in the screen of the main menu, as exemplified in Fig. 5(B). If any of those other menus is selected, the answer of step S34 is denied, and the routine returns to step S6, at which the aforementioned step is executed again. If, on the other hand, it is decided at step S34 that another main menu is selected, the answer of step S34 is affirmed, and the routine advances to step S36, at which the individual menu steps are executed according to the selected main menus. After this, the routine advances to step S38, at which it is decided whether or not the destination is set. If, moreover, the destination is set as a result of the execution of the individual menu steps of step S36, the answer of step S38 is affirmed, and the destination setting step 1 is ended.

Here, in case the telephone number menu 16f is selected, for example, the operation for setting the destination is executed by inputting the telephone number of the destination. In case the address menu 16g is selected, on the other hand, the operation for setting the destination is executed by inputting the address of the destination.

The step S36 in which the destintaion is set by inputting a telephone number will be described later on.

In the destination setting step 1 thus far described in detail, the first genre menu 16d of the same hierarchy as that of the genre menu 16q of the lower hierarchy, as enumerated and displayed in case the other facilities menu 16e is selected, is displayed as well as the other facilities menu 16e (at S4, as exemplified in Fig. 5(B)) in the main menu displayed in the display 22a. If the first genre menu 16d is selected (if YES at S6), the nationwide and individual prefecture menus are instantly enumerated and displayed (at S8, as exemplified in Fig. 7(B)).

Therefore, here will be compared the case, in which the first genre menu 16d is selected, and the case in which the genre menu 16q other than the first genre menu 16d is selected. In the latter case, the nationwide and individual prefecture menus are not enumerated and displayed (at S8) before any genre menu 16q is selected (if YES at S28 and S32, as enumerated in Figs. 8(B) and 9), from the plurality of genre menus 16q which are enumerated and displayed by once selecting the other facilities menu 16e (if YES at S10). Thus, the former has a higher operation efficiency because it does not require the operation for selecting the other facilities menu 16e.

In the first embodiment, therefore, the genre name data for displaying the genre menu to be frequently used by the operator are stored as the first genre name data of the index data in the disc of the external storage unit 18 so that the genre menu to be frequently selected is displayed as the first genre menu 16d in the main menu. As a result, the destination can be efficiently set by selecting the genre names.

Incidentally, when the genre menu to be frequently used by the operator is to be determined, for each kind of the vehicle for mounting the navigation system 10, for example, the tastes of the user to be imagined as the driver or passenger of the vehicle may be estimated so that they may be taken into consideration. (In case the navigation system 10 is to be mounted on a vehicle of outdoor type, for example, the genre name data for displaying the genre menu "CAMPSITES" are stored in advance in the head of the index data of the disc of the external storage unit 18 of the navigation system 10 so that the genre "CAMPSITES" may be displayed as the first genre menu 16d).

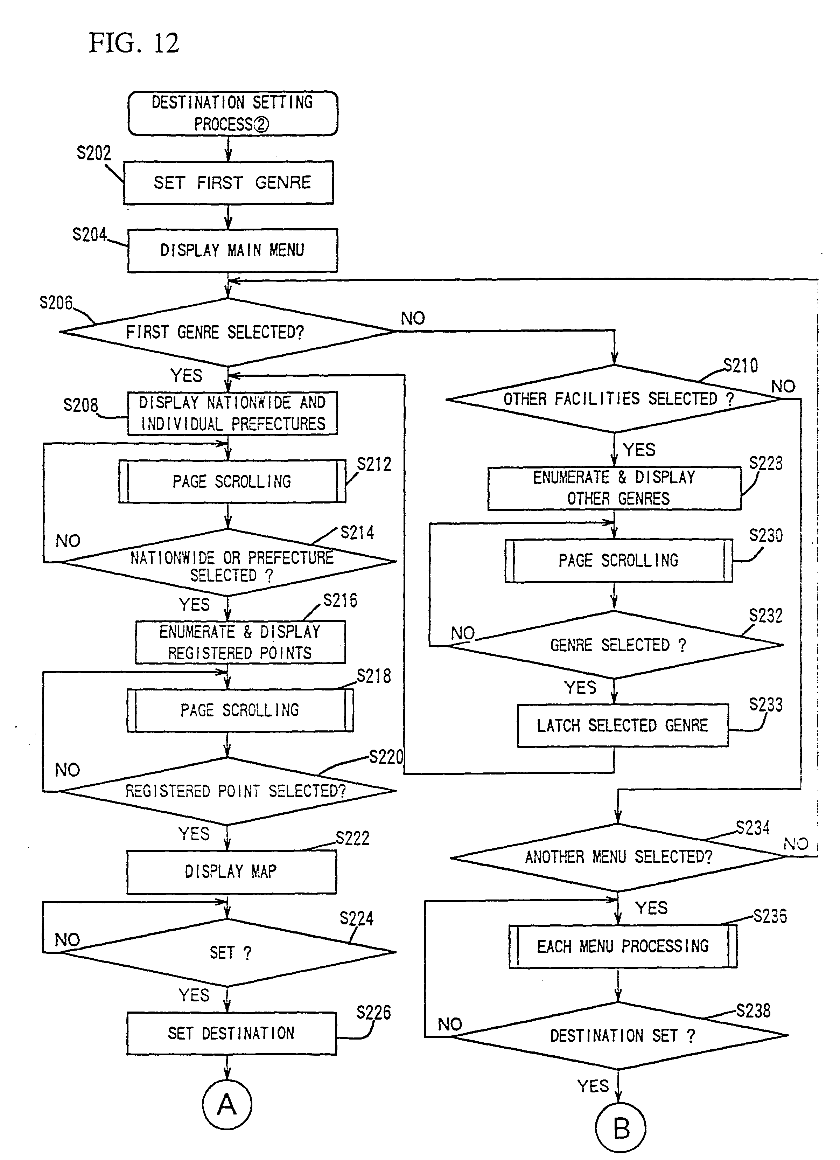

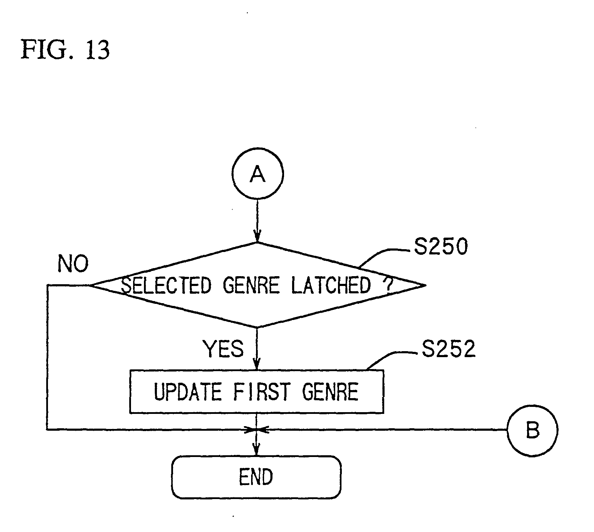

A second embodiment of the present invention will be described in the following while stressing the differences from the foregoing first embodiment. In the second embodiment, with the same construction as that of the first embodiment having been described with reference to Figs. 4, 5(A) and 6, the control section 24 executes a destination setting step 2, as shown in the flow charts of Figs. 12 and 13. Of the individual steps in the flow charts of Figs. 12 and 13, the steps having the same contents as those of the first embodiment, as described with reference to Figs. 10 and 11, will not be described but be related thereto merely by adding numerals 200 to the steps of the first embodiment.

In the destination setting step 2 of the second embodiment, the first genre menu 16d to be displayed together with the main menu in the display 22a is set on the basis of the genre name data indicating the genre menu 16q selected at the destination setting step 2 which has been executed at the last (or more previous) operation and stored in the backup RAM in the RAM 30. As a result, what is displayed as the first genre menu 16d in the main menu in the second embodiment is the genre menu 16q which is selected at the destination setting step 2 executed at the last (or more previous) operation.

The destination setting step 2 of the second embodiment will be described in detail with reference to Figs. 12 and 13. When the destination setting step 2 is started, at first step S202, the first genre menu 16d is set on the basis of the genre name data stored in the backup RAM in the RAM 30.

Incidentally, at this step S202, before the first genre menu 16d is set, it is once confirmed whether or not the genre name data stored in the backup RAM are stored in the index data in the disc of the exter nal storage unit 18. If stored, the first genre menu 16d is set on the basis of the genre name data stored in the backup RAM, as described above. As an exceptional case, however, if the genre name data stored in the backup RAM are not stored in the index data, the first genre menu 16d is set on the basis of not the genre name data stored in the backup RAM but the genre name data stored at first in the index data. This exception is an extremely exceptional case to be invited by the following cause. For example, it is conceivable that the genre name data stored in the index data may be different between the discs of the old and new year editions. Then, at the destination setting step 2 to be executed immediately after the disc is renewed from the old to new year editions, the genre name data in the backup RAM written on the basis of the index data of the disc of the old year edition may fail to be stored in the index data of the disc of the new edition. Moreover, this exceptional case has little relation to the gist of the present invention, and the following description will be made while eliminating the exceptional case.

At step S204 subsequent to step S202, the genre name data stored in the backup RAM and the predeter mined data stored in the disc of the external storage unit 18 are based to drive and control the display section 22 so that the main menu containing the first genre menu 16d set at step S202 is displayed in the display 22a, as exemplified in Fig. 5(B).

The steps S206 to S226 to be executed subsequent to step S204 are similar to those of steps S6 to S26 to be executed in the aforementioned first embodiment.

Moreover, the steps S210 and S228 to S232, which are to be reached if it is decided at step S206 subsequent to step S204 that the first genre menu 16d is not selected, are substantially similar to those of steps S10 and S28 to S32 to be executed in the foregoing first embodiment.

In the second embodiment, however, the routine does not advance directly to step S8 in the least, for enumerating and displaying the nationwide and individual prefecture menus of the selected genre, as in the first embodiment, immediately after the answer of step S232 is affirmed, that is, after any of the genre menus 16q is selected in the screen of the display 22a, as exemplified in Figs. 8(B) and 9. In the second embodiment, on the contrary, the step S233 is once executed to write and latch the genre name data for displaying the selected genre menu 16q in a predetermined region of the RAM 30, and the routine then advances to step S208, at which the nationwide and individual prefecture menus are enumerated and displayed for the selected genre.

After the destination is set by executing the steps S208 to S226, the routine advances to step S250 shown in Fig. 13, at which it is decided whether or not the genre name data are latched in the predetermined region of the RAM 30 by executing the preceding step S233. If the genre name data are latched in the RAM 30, the answer of step S250 is affirmed, and the routine advances to step S252, at which the genre name data for the basis of setting the first genre menu 16d at step S202 for the subsequent destination setting step 2 are updated by writing the genre name data in the backup RAM. After this, the destination setting step 2 is ended. By executing this step S252 as well as the aforementioned step S233, the control section 24 functions as the learning means forming a component of the invention as set forth in Claim 2.

If, on the other hand, none of the genre name data is latched in the predetermined region of the RAM 30, the answer of step S250 is denied, and the routine skips the step S252 to instantly end the destination setting step 2.

At the destination setting step 2, therefore, if the first genre menu 16d is selected (if YES at S206) in the main menu, the genre name data in the backup RAM are not updated (if NO at S250). As a result, the genre menu like the previous one is also used as the first genre menu 16d at the next destination setting step 2 and is displayed together with the main menu in the display 22a.

In case, on the other hand, the other facilities menu 16e is selected (if NO at S206 and if YES at S210) in the main menu so that any of the genre menus 16q, as exemplified in Figs. 8(B) and 9, is selected (if YES at S232), the genre name data for displaying the selected genre menu 16q are written and latched (at S233) in a predetermined region of the RAM 30. Before the end of the destination setting step 2, the genre name data in the backup RAM are updated (if YES at S250, and at S252) on the basis of the genre name data latched in the RAM 30. At the subsequent destination setting step 2, the genre menu 16q selected at the last step is used as the first genre menu and is displayed together with the main menu in the display 22a.

In the second embodiment, therefore, the genre menu selected at the previous destination setting time is used as the first genre menu and is displayed together with the main menu in the display 22a. As a result, in case the genre menu selected at the time of setting the previous destination is to be selected again, the first genre menu may be selected. As has been described in connection with the first embodiment, therefore, the operation of selecting the other facilities menu 16e need not be selected in the least for enumerating and displaying the genre menus 16q, as has been described in connection with the first embodiment. As a result, the trouble for the necessity can be eliminated to improve the operation efficiency for selecting the same genre as the previous one when the destination is to be set.

As exemplified in Figs. 8(B) and 9, on the other hand, all the genre menus 16q cannot be displayed in one screen of the display 22a, and the page scrolling key 16r may have to be operated many times to search a desired one from all the genre menus 16q. If, in this case, the desired genre menu is used as the first genre menu 16d by using the navigation system 10 of the first embodiment or the second embodiment, it is unnecessary to operate the page scrolling key 16r so as to retrieve the genre menus which are enumerated and displayed over a plurality of screens, so that the operation efficiency can be improved. Thus, the first and second embodiments are especially effective in case all the genre menus 16q are enumerated and displayed over the plurality of screens, as exemplified in Figs. 8(B) and 9, in the small display 22a of the vehicular navigation system 10 to be mounted in a space-limited compartment.

Incidentally, in the second embodiment, the genre menu, as selected at the last time, is used as the first genre menu. Alternatively, there may be provided counter means for counting the number of selections of each of all the genre menus, so that the genre menu of the largest selection number may be displayed as the first genre menu in the main menu on the basis of the calculation result. Then, the operation efficiency can be further enhanced.

In the first and second embodiments, moreover, not only the other facilities menu 16e as the menu of a predetermined hierarchy but also one of the genre menus or the menu of a subsequent hierarchy is displayed as the first genre menu in the main menu. However, the menu to be displayed together with the other facilities menu 16e should not be limited to the menu of the hierarchy subsequent to that of the menu of the predetermined hierarchy. For example, together with the other facilities menu 16e, the menu of the lower hierarchy than the subsequent one of the menu of the predetermined hierarchy, such as the menu of GOLF COURSES OF AICHI or AICHI CC can be displayed in the main menu to further improve the efficiency of the menu selecting operation. In this case, as the gap between the predetermined hierarchy and the lower hierarchy having the menu to be displayed together with the menu of the former hierarchy is enlarged to increase the more the hierarchies to be interposed between the aforementioned two hierarchies, the number of the menu selecting operations to be omitted for selecting the menu of the lower hierarchy grows the larger so that the merit of employing the present invention rises to the higher level.

In the first and second embodiments, moreover, the menu of the lower hierarchy to be displayed together with the other facilities menu 16e as the menu of the predetermined hierarchy is limited to the first genre menu 16d. However, the first genre menu should not be limited to the one menu 16d, but the efficiency of the menu selecting operation can be further improved by providing a second genre menu and a third genre menu, for example, and by displaying those second and/or third genre menus as well as the first genre menu together with the menu of the predetermined hierarchy in the main menu. If, for example, three or so of the menus of the lower hierarchy, as selected in the past, that is, either the three menus selected in the near past or the three menus selected in the past and having the high frequencies are displayed together with the menu of the present invention hierarchy, there can be achieved remarkably high convenience and operation efficiency.

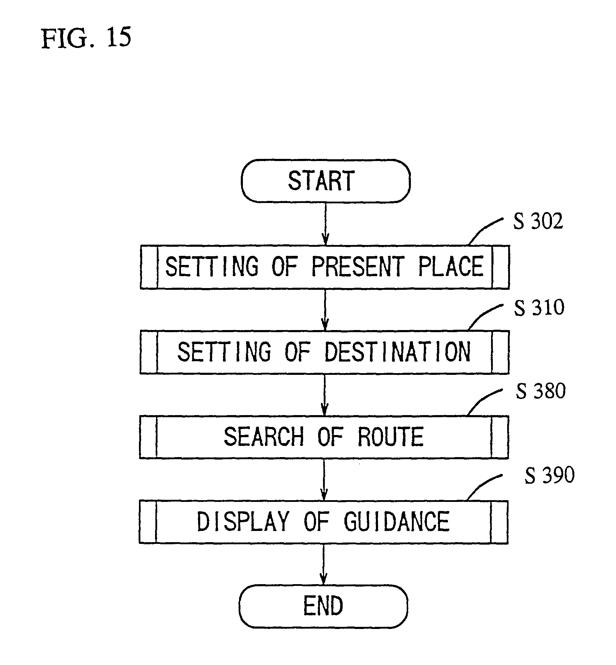

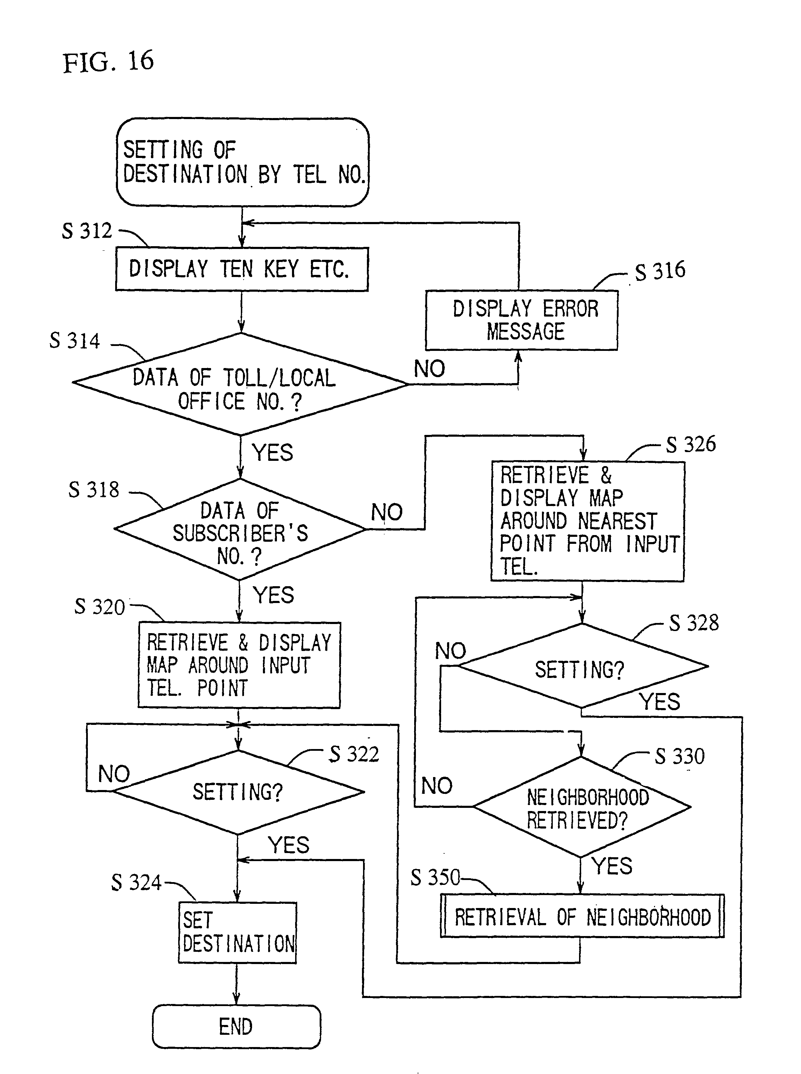

As shown in Figs. 10 and 12, the steps S36 and S236 can be used to set a destination by inputting a telephone number. This action will be described in connection with Figs. 15 and 16.

Firstly, it is to be mentioned that the storage medium such as the CD-ROM, which is accurately stored in advance with all the nationwide addresses and telephone numbers, is extremely difficult to manufacture, because the address names and the telephone numbers will change with lapse of time. Specifically, the address names may change according to the change in the administrative division, and a new address may be set according to the preparation of housing sites. On the other hand, the telephone numbers may be frequently renewed or abolished even for one year for which the telephone directory or the standard materials for storing the storage medium with the telephone numbers is revised.

Thus, it is difficult to prepare the storage medium which is completely stored with all the addresses and the telephone numbers. When the destination or the present place is to be set, the address or telephone number inputted may fail to reside in the storage medium. In this case, it would be convenient to give a clue (in the form of the "landmark") for the operator to reach the desired position. This convenience can be achieved by the function which is exhibited by the navigation system 10.

On the contrary, however, a plurality of telephone numbers can exist in one point as in the case of a building housing a number of independent business institutions, so that the number of telephone numbers is far larger than that of the addresses. Since, moreover, there are the secret telephone numbers which are not known to those other than specific persons, it is far difficult to prepare the storage medium stored with all the telephone numbers than to prepare the storage medium stored with all the addresses.
Thus, the navigation system 10 is required more for the case, in which the destination is set by inputting a telephone number, than the case in which the destination is set by inputting an address.

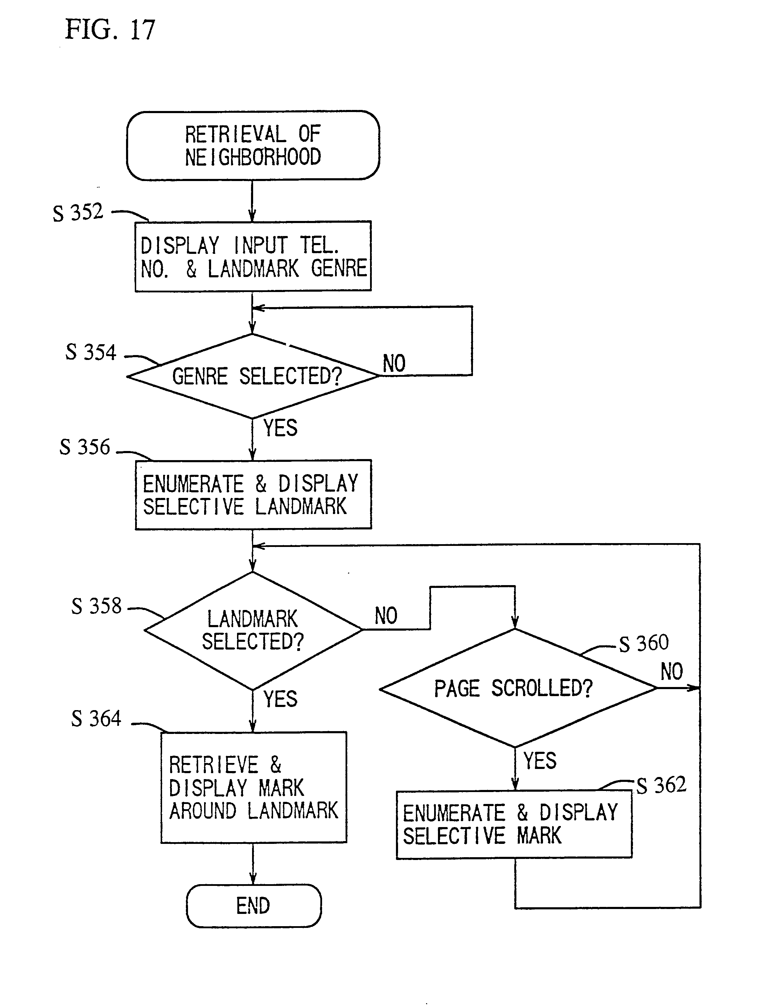

In connection with the screen example of the display 22a shown in Fig. 5(B), the destination setting step (as will be shortly referred to as the "present step"), which is effected by inputting a telephone number as the information relating to the position and started by touching a telephone number menu key 16f having the letters "TEL. NO." enclosed by a rectangle, will be described with reference to the flow charts of Figs. 16 and 17.

According to the summary of the present step, it is decided at steps S312, S314 and S318 whether or not the data inputted as the position related information from a ten-key 16s and indicating a telephone number, are stored in the external storage unit 18. If the input telephone number is stored as the data, the routine advances to steps S320 to S324, at which the neighbourhood of the position of the telephone having the input number is set as the destination. If, on the contrary, the input telephone number is not stored as the data in the external memory unit 18, the routine advances through steps S326 to S350. As a result, the neighbourhood searching step for displaying and selecting the landmark in accordance with the gist of the present invention is executed to set the neighbourhood of the place, in which the landmark selected by the operator exists, as the destination.

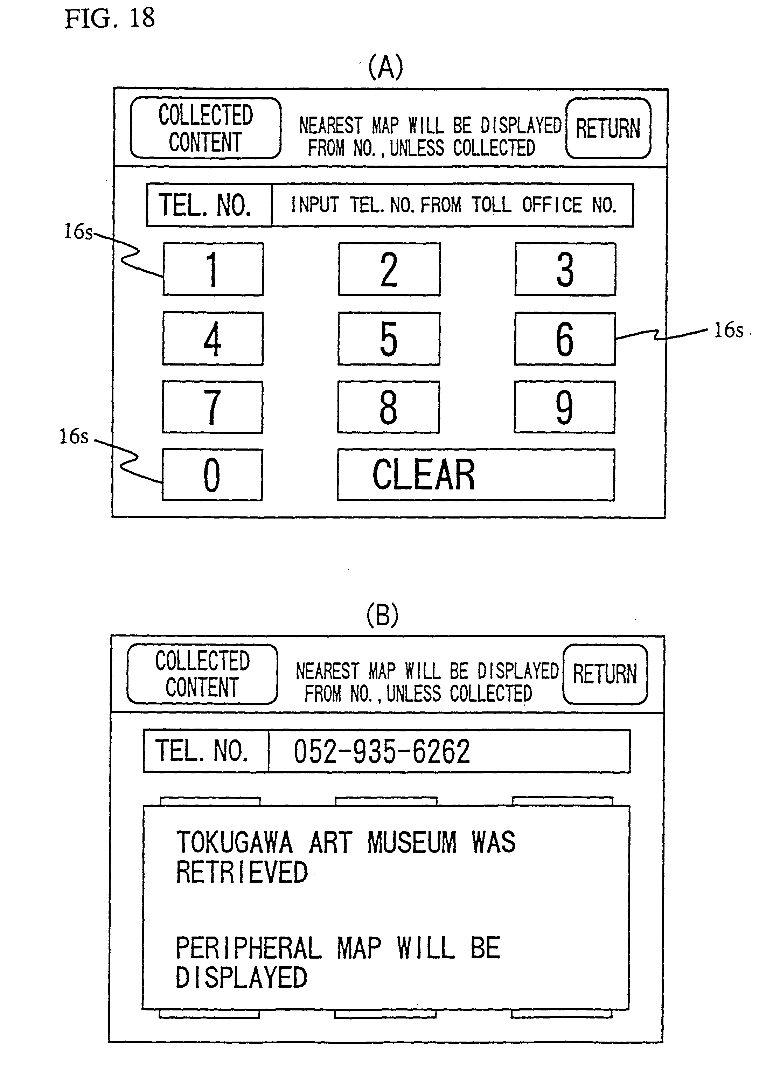

The present step will be described in more detail. In the present step, at the first step S312, there are displayed in the display 22a both the ten- key 16s as the input means and the message "INPUT TEL. NO. FROM TOLL NO.", as shown in Fig. 18(A). Then, the routine advances to step S314, .at which it is decided whether or not the toll/local office number data indicating the numeral series of six or less figures from the first, as inputted by touching the ten-key 16s, are within the toll/local office number list read out from the external memory unit 18. Unless there are the data indicating the input office number, the decision of NOT is made at step S314, and the routine advances to step S316, at which the error message "INPUT TEL. NO. WAS NOT COLLECTED" is displayed in the display 22a, until the routine is returned to step S312.

If, on the contrary, the toll/local office number data indicating the input office number is in the toll/local office number list, the decision of YES is made at step S314, and the routine advances to step S318. At step S318, it is decided whether or not the data indicating the subscriber's number or the numeral series inputted subsequent to the input of the office number which has been decided as exists as the toll/local office number data are as the subscriber's number data in the data group set of the subscriber's number list which is read out from the external memory unit 18 on the basis of the subscriber's number address & size data in the same data group as those toll/local office number data.

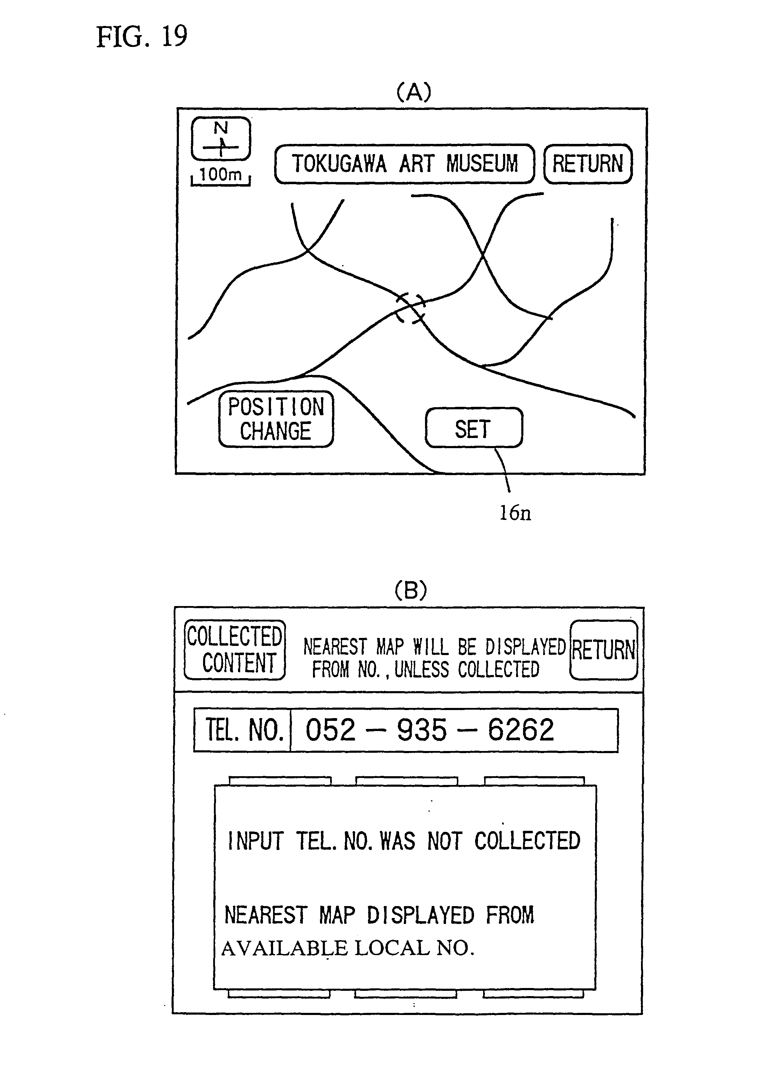

If such subscriber's number data are present, the decision of YES is made at step S318, and the routine advances to step S320. At step S320, on the basis of the name data in the same data group as that of the subscriber's number data decided to exist at step S318, the display section 22 is driven and controlled so that the message for transmitting the subscriber's name of the input telephone number is displayed in the display 22a, as shown in Fig. 18(B). After this, on the basis of the point E.L. % N.L. data and the map display scale data in the same data group as that of the subscriber's number data, the map data stored in the external storage unit 18 are retrieved to read out the predetermined map data. On the basis of the map data thus read out and the aforementioned name data, the display section 22 is driven and controlled so that the map around the position of the telephone of the input telephone number and the owner of the telephone number are displayed on the display 22a, as shown in Fig. 19(A).

Specifically, the telephone number "0529356262" is inputted by the ten-key 16s displayed in the screen of the display 22a, as specifically shown in Figs. 18 and 19(A). Then, the first six figures "052935" indicating the toll/local office number data are searched from the toll/local office number list (i.e., YES at S314). Then, the subscriber's number data indicating the inputted subscriber's number "6262" are searched (i.e., YES at S316) from the data group set of the subscriber's number list which is read out on the basis of the subscriber's number address & size data in the same data group as that of the toll/local office number data indicating "052935". On the basis of the point E.L. & N.L. data and the map display scale data in the same data group as that of the searched subscriber's number data, the map data stored in the external storage unit 18 are retrieved to read out the predetermined map data. On the basis of the name data in the same data group as that of the map data read out and the aforementioned subscriber's number data, the name of "TOKUGAWA ART MUSEUM", i.e., the owner of the input telephone number and the map around the position of the same are displayed in the display 22a (at S320).

Subsequent to step S320, the routine advances to step S322. At step S322, it is decided whether or not the setting operation to set the center portion of the map being displayed as the destination is effected by touching a set key 16n which has the letters "SET" enclosed by a rectangle at the righthand lower portion of the screen of the display 22a, as shown in Fig. 19(A).

Without such setting operation, the decision of NO is made at step S322, and the setting operation is awaited. With this setting operation, on the contrary, the decision of YES is made at step S322, and the routine advances to step S324, at which the center position of the map displayed in the display 22a at the setting time is set as the destination. After this, the present step is ended, and the routine subsequently advances to step S380 of Fig. 15 so that the aforementioned route searching step is executed.

When, moreover, it is decided at step S318 that the data indicating the input subscriber's number are not present as the subscriber's number data in the data group set of the subscriber's number list read out from the external storage unit 18, the decision of NO is made at step S318, and the routine advances to step S326.

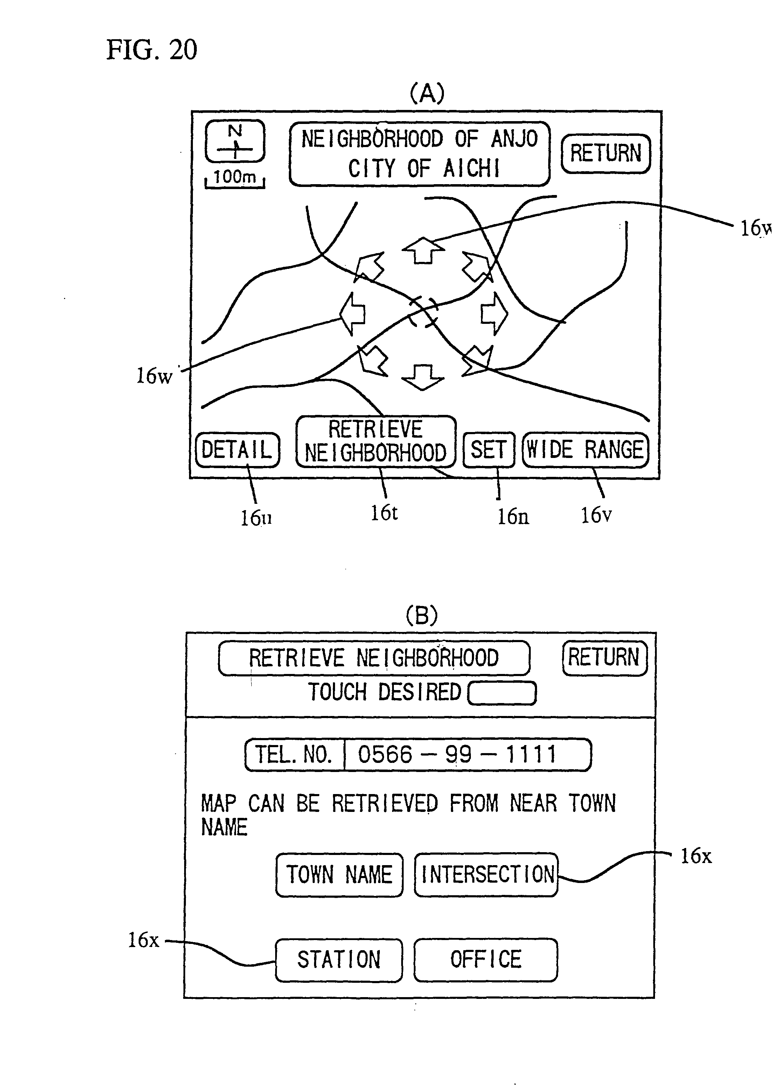

At step S326, as shown in Fig. 19(B), the input telephone number, its failure to be collected, and the message "NEAREST MAP WILL BE DISPLAYED" are displayed. After this, on the basis of the representative point E.L. & N.L. data and the map display scale data in the same data group as that of the toll/local office number data indicating the office number already inputted, the map data stored in the external storage unit 18 are retrieved to read out the predetermined map data. On the basis of the map data read out, the display section 22 is driven and controlled so that the name of the area, to which is assigned the input office number, and the representative point in that area are displayed in the display 22a, as shown in Fig. 20(A), and the routine then advances to step S328.

At step S328, it is decided whether or not the setting operation for setting the center position of the map being displayed in the display 22a as the destination is executed by touching the set key 16n which is displayed at the righthand lower but central portion of the screen of the display 22a, as shown in Fig. 20(A).

If this setting operation is executed, the decision of YES is made at step S328, and the routine advances to step S324, at which the center position of the map displayed in the display 22a at the setting time is set as the destination. After this, the present step is ended, and the routine subsequently advances to step S380 of Fig. 15, at which the aforementioned route searching step is executed.

If, on the contrary, the setting operation is not executed with the screen shown in Fig. 20(A) being displayed in the display 22a, the decision of NO is made at step S328, and the routine advances to step S330, at which it is decided whether or not a neighbourhood retrieval key 16t displayed at the lefthand lower and central portion of the screen of the display 22a is touched.

If the neighbourhood retrieval key 16t is not touched, the decision of NO is made at step S330, and the routine is returned to step S328. If, on the contrary, the neighbourhood retrieval key 16t is touched, the decision of YES is made at step S330, and the routine advances to step S350, at which the neighbourhood retrieval shown in Fig. 17 is executed.

Incidentally, if a detail key 16u or a wide range key 16v displayed at the lefthand corner of the screen are touched with the screen shown in Fig. 20(A) being displayed in the display 22a, the map being displayed has its scale enlarged or reduced to change into a detailed map or a wide range map. If, on the other hand, a scroll key 16w displayed radially from the center of the map being displayed in a similar screen is touched, the map being displayed can be scrolled in the direction of arrow.

When the neighbourhood retrieval shown in Fig. 17 is executed, at first step S352, on the basis of all the genre name data existing in the data group set of the landmark genre list read out from the external memory unit 18 on the basis of the landmark genre address & size data in the same data group as that of the toll/local office number data indicating the inputted office number, the display section 22 is driven and controlled so that genre keys 16x, in which all the landmarks existing in the assigned area of the inputted office number are individually classified to have the genre names enclosed by rectangles, are displayed together with the input telephone number in the display 22a, as shown in Fig. 20(B).

Subsequent to step S352, the routine advances to step S354, at which it is decided whether or not the genre indicated by the operated genre key 16x is selected by touching any of the genre keys 16x.

If none of the genre keys 16x is touched, the decision of NO is made at step S354, and the touching operation of any of the genre keys 16x is awaited. If, on the contrary, any of the genre keys 16x is touched, it is decided that the genre indicated by the touched genre key 16x is selected, and the routine advances to step S356.

At step S356, on the basis of the landmark point address & size data in the same data group as that of the genre name data indicating the selected genre name in the data group set of the landmark genre list used as the basis when the genre names are enumerated and displayed in the display 22a at step S352, the data group set of the landmark point list is read out from the external storage unit 18. On the basis of all the point name data and the point name rendering data in the read data group set, the display section 22 is driven and controlled not only the selected genre names but also all the names of the landmarks existing in the assigned area of the inputted office number and classified into the selected genre are enumerated and displayed in the KANA syllabic order in the display 22a, as shown in Fig. 21(A).

Incidentally, in case all the landmark names to be thus enumerated and displayed cannot be displayed at one time in the display 22a, a page scroll key 16j, as displayed at the lefthand side portion of the display screen of Fig. 21(A) is touched to switch the display screen, as will be described at steps S360 and S362, so that the names of landmarks which were not display in the screen before switched can be sequentially enumerated and displayed in the KANA syllabic order.

At step S358 to be executed subsequent to step S356, it is decided whether or not a landmark corresponding to an operated select key 16i is selected by touching the select key 16i which is displayed in a rectangular shape at the lefthand side of the name of each landmark, as shown in Fig. 21(A).

If any of the select keys 16i is not operated, the routine advances from step S358 to step S360, at which it is decided whether or not the page scroll key 16j is operated. If this page scroll key 16j is not operated, the decision of NO is made at step S360, and the routine is quickly returned to step S358. If, on the contrary, the page scroll key 16j is operated, the routine advances from step S360 to step S362, at which the display screen of the display 22a is switched so that the names of the landmarks which were not displayed before the operation of the page scroll key 16j are enumerated and displayed in the display 22a, and the routine is then returned to step S358.

Incidentally, each time the beginning sound of the names of the landmarks enumerated and displayed in the KANA syllabic order becomes different, the KANA name expressing the beginning sound of the landmark name is displayed in the select key 16i corresponding to the first landmark having the different sound.
Moreover, the display screen is switched by touching the page scroll key 16j displayed as the "KANA SYLLABARY" so that the landmark corresponding to the select key 16i indicating the next sound of the beginning sound of the landmark displayed at the end of the enumerated display just before the touching operation is displayed at the beginning of the enumeration.

Moreover, when the landmark is selected by touching the select key 16i, the decision of YES is made at step S358, and the routine advances to step S364. At this step S364, of the data group set of the landmark point list providing the basis for enumerating and displaying in the display 22a at step S356, the point E.L. & N.L. data and the map display scale in the same data group as that of the landmark point name data of the selected landmark are based to retrieve the map data stored in the external storage unit 18 to read out the predetermined map data, upon which the display section 22 is driven and controlled so that the map around the place of the selected landmark is displayed in the display 22a, as shown in Fig. 21(B).

Incidentally, in the map screen shown in Fig. 21(B), too, the reduction scale of the map being displayed can be switched to a wider range map by touching the wide range key 16v, as has been described with reference to Fig. 20(A), and the map can be scrolled by touching the scroll key 16w.

After the execution of step S364, the neighbourhood retrieving step is ended, and the routine is returned to step S322, at which it is decided whether nor not the set key 16n is operated, as described before. If it is decided that the set key 16n is not operated, the operation of step S322 is repeated to await the operation of the set key 16n. If this set key 16n is operated, on the contrary, the decision of YES is made at step S322, and the routine advances to step S324, at which the position of a landmark around the map being displayed in the display 22a is set as the destination. After this, the present step is ended, and the routine subsequently advances to step S380 of Fig. 15, at which the aforementioned route searching step is executed.

Thus, the routine till the map around the position of the landmark selected by the operator is displayed in the display 22a by executing the neighbourhood retrieving step after the unregistered telephone number is inputted will be specifically described with reference to Figs. 18(A), 19(B), 20 and 21.

Specifically, an unregistered telephone number such as "0566991111", which is not stored in the external storage unit 18, is inputted at first by the ten-key 16s displayed in the screen of the display 22 shown in Fig. 18(A). Then, the toll/local office number data indicating "056699" is retrieved in the toll/local office number list. Since, however, the subscriber's number data indicating the subscriber's number "1111" is not in the data group set of the subscriber's number list belonging to "056699" (that is, NO at S318), the messages, as indicated in Fig. 19(B), are displayed in the display 22a. After this, the representative point E.L. & N.L. data in the same data group as that of the toll/local office number data indicating "056999" are based to display the map around the representative point of ANJO CITY OF AICHI PREFECTURE in the display 22a (at S326).

When the neighbourhood retrieval key 16t is touched, moreover, all the genre name data in the data group set of the landmark genre list read out from the external storage unit 18 on the basis of the landmark genre address & size data in the same data group as that of the toll/local office number data indicating "056699" are based to display, in the display 22a, the genre keys 16x in which the four genres "INTERSECTION", "TOWN NAME", "STATION" and "OFFICE" classified from all the landmarks existing in ANJO CITY or the assigned area of the office number "056699" are enclosed by rectangles (at S352).

If, in this state, the genre key 16x of the "INTERSECTION" is touched, of the data group set of the landmark genre list belonging to "056699", the point name data and the point name rendering data in the data group set of the landmark point list read out from the external storage unit 18 on the basis of the landmark point address & size data in the same data group as that of the genre name data indicating the "INTERSECTION" are based to enumerate and display all the intersection names existing in the ANJO CITY, in the display 22a in the KANA syllabic order, as shown in Fig. 21(A).

When the select key 16i corresponding to "AKAMATSU" is touched, moreover, the point E.L. & N.L. data and the map display scale data in the same data group as that of the point name data indicating "AKAMATSU" are based to retrieve the map data stored in the external storage unit 18 and to read out the predetermined map data, and these map data are based to display the map around the AKAMATSU INTERSECTION in ANJO CITY of AICHI PREFECTURE, in the display 22a, as shown in Fig. 21(B).

As has been described in detail hereinbefore, according to the present embodiment, even if an unregistered telephone number which is not stored in the external storage unit 18 is inputted: by executing the neighbourhood retrieval by touching the neighbourhood retrieval key 16t, the names of the genres having classified the landmarks existing in the assigned area of the office number can be enumerated and displayed (at S352); by touching the genre key 16x, the landmarks classified into the selected genre can be enumerated and displayed (i.e., YES at S354, and at S356); and by touching the select key 16i from the landmarks enumerated and displayed, the map around the selected landmark can be displayed.

As a result, according to the present embodiment, even in case the telephone number as the destination position related information known to the operator is not stored as the telephone number data (i.e., the toll/local office number data + the subscriber's number data) in the external storage unit 18, the area in the neighbourhood of the point corresponding to the telephone number as the position related office number is decided, if the telephone number is inputted, as the assigned area of the toll/local office number on the basis of the toll/local office number of the input telephone number so that the landmarks existing in the area are retrieved on the basis of the landmark genre address & size data and the landmark point address & size data in the toll/local office number list. On the basis of the retrieved result, those of the landmarks enumerated and displayed in the display 22a, which are known to the operator, are selected so that the map around the position of the landmark is displayed. By operating the wide range key 16v and the scroll key 16w, the destination can be easily searched on the map by using the position of the landmark as a clue.

By operating the set key 16n with the map around the position of the selected landmark being displayed in the display 22a, moreover, the landmark position is set as a tentative destination to execute the route retrieval and is actually reached according to the guidance of the navigation system 10. After this, the desired destination is actually searched with ease by using the landmark position as a clue.

Even in case none of the enumerated and displayed landmarks is known to the operator, the landmark, e.g., the station or town office in the neighbourhood of a desired destination, which can provide the information on the position of the desired object if actually called at, is selected and set as a tentative destination so that the vehicle can be guided to the tentative destination. According to the present embodiment, it is easy to achieve a clue to reach the desired destination.

Incidentally, in the present embodiment, after it is decided that the input telephone number is not stored in the storage unit 18 and before the names a plurality of landmarks existing in the assigned area of the toll/local office number are enumerated and displayed on the basis of the toll/local office number data, a plurality of genre names having classified the plurality of landmarks existing in that area are retrieved on the basis of the genre name data and displayed in the display 22a in accordance with the retrieved result so that the user can select the genre names. As a result, the user operates the genre key 16x to select the genre having classified the desired landmark and enumerates and displays the landmarks belonging to that genre so that the desired landmark can be selected by operating the select key 16i. As a result, the desired landmark can be selected without any complicated key operation unlike the case, in which a variety of different landmarks are enumerated and displayed without any displace of the genre of the landmark. Thus, the present embodiment is effective especially in case the user selects the landmark after he determines a certain genre, as in case the user meets by determining a point of a landmark in advance.

In the present embodiment, moreover, a clue for reaching the desired destination can be provided even in the worst case to display the position of the landmark in the neighbourhood of the desired destination in the map, or the position of the landmark can be used as a tentative destination to search the route to the tentative destination and to give a guidance. As a result, even in case the storage medium having a smaller number of registered telephone numbers is used as the external storage unit 18, it is possible to provide the navigation system 10 which is convenient for the operator.

Incidentally, according to the navigation system 10 of the present embodiment, when the names of the landmarks enumerated and displayed are selected by operating the select key 16i, as shown in Fig. 21(A), the point E.L. & N.L. data and the map display scale data in the same data group as that of the point name data of the selected landmark are based to retrieve the map around the position of the landmark, and this map around the landmark is displayed in the display 22a, as shown in Fig. 21(B), so that the position of the landmark can be remarkably conveniently confirmed on the map.

In the vehicular navigation system 10 of the present embodiment, moreover, the landmark being displayed in the display 22a can be used as a clue to set a desired position as the destination by operating the set key 16n, and the optimum route from the departure position or present position to the set destination can be retrieved at the route retrieving step S380 of Fig. 15 so that a suitable guidance can be accomplished at the guidance display step S390 in accordance with that optimum route by the display of the display 22a and the voice guidance of the voice output section 20. Therefore, even the driver having only the telephone number and the memory of the landmark in the neighbourhood of the destination for a clue to the destination can set the destination by a remarkably simple operation and can reach the destination according to the guidance.

The present embodiment has been described in connection with the destination setting step for setting the destination, but the present invention should not be limited to this case of setting the destination. The present embodiment can be applied to the case, in which the position of a point or area having any meaning is inputted for retrieval, as in case the present place, the departure or the transit point is to be set. In these cases, too, the clue for approaching the desired position or area can be provided as the landmark as in the present embodiment.

In the present embodiment, the position of the selected landmark is retrieved by executing steps step S364 through steps S322 and S324 and step S380, and the map around the position of the landmark is once displayed on the display 22a on the basis of the retrieved position. If the set key 16n is touched, the position of the landmark is set as the destination, and the routine shifts to the execution of the route searching step. However, the procedures of displaying the map around the selected position and setting the destination by operating the set key 16n may be omitted, and the position of the landmark may be set as the destination instantly as the select key 16i is touched, so that the procedure may be subsequently shifted to the execution of the route searching step. In the present embodiment, moreover, the guidance is made by the display screen in the display and the voice during the run of the vehicle along the route which is searched by executing the route searching step. However, the guidance of the running vehicle can be made only by the voice without using the display screen.

Moreover, the present embodiment has been specifically described in case the landmark belongs to the four genres of intersection, town name, station and town office. However, the landmark should not be limited to those four genres but may be one belonging to any genre if the landmark is useful for searching the position or area of a point such as school, police office, post office or bank. Specifically, the landmark can be exemplified by the items described in the remarks of a paper map commercially available in the prior art.

In addition, for example, the genres of landmarks may be vertically enumerated and displayed, as shown in Fig. 21(A). In this case, the genres may be vertically arranged and displayed in the display 22a in the order of the larger number of classified landmarks, i.e., the large storage capacity of the data written in the landmark point address & size data.

Moreover, as the "TOWN NAME" is used as the landmark in the present embodiment, the landmark need not always actually exist in a predetermined point but may be a conceptional one or an area having a predetermined range such as a park. The landmark position information for indicating the position of the landmark extending in a predetermined range is made to indicate the geographical center position of the area, in which the landmark exists, so that the landmark may be displayed in its entirety in the map displayed in the display unit.

In addition, in the present embodiment, the landmark names are enumerated and displayed at step S356, as shown in Fig. 21(A). In place of the landmark names, however, the photographs indicating the appearances of the landmarks, drawings, abbreviations or pet names may be enumerated and displayed. The operator ignorant of the formal names of landmarks can be conveniently acquainted with the landmarks by enumerating and displaying the photographs or the line indicating the appearances of the landmarks.

In the present embodiment, moreover, for conveniences of the case in which the control section 24 is to read the data from the external storage unit 18, the address & size data for providing correspondences among the toll/local office number list, the landmark genre list and the landmark point list are individually contained in the toll/local office number list and the landmark genre list. Without any storage of those address & size data, however, in case the rate for the CPU to read and process the data from the external storage unit is sufficiently high, not only the point E.L & N.L. data indicating the positions of the landmarks, the data of the landmark names, the rendering of the names and the map display scale are stored, and the landmarks existing in the assigned area of the input office number are directly retrieved on the basis of the point E.L. & N.L. data indicated by the positions of the landmarks so that the genre names and the names of the landmarks may be enumerated and displayed on the basis of the data indicating the genre names and the landmark names stored together.

Specifically, in case there are not stored the data indicating the address inputted in that way or the data indicating the position of the point on the touched map, either all the landmarks existing in the "TOWN OR VILLAGE SECTION" of the inputted address or all the rears in the map region displayed in the display at the touching time may be enumerated and displayed, to display the map around the position selected by the selector from those landmarks enumerated and displayed.

Incidentally, the first and second embodiments have been described in connection with the vehicular navigation system 10, but the inventions as set forth in Claims 1 to 4 should not have their application limited to the vehicular navigation system but can be applied to any technique if this technique can input an instruction corresponding to a hierarchical menu to be displayed in the display unit, by selecting the menu. Specifically, the menu selecting operations can be made efficient by using the inventions as set forth in Claims 1 to 4, even in the case of a personal computer or word processor, in which a plurality of menus such as "calculations", "list management" or "communications" are displayed and in which if any of them is selected the menu of a subsequent hierarchy is displayed for each selected menu. This will be reasoned in the following. Even in the personal computer or word processor having such functions installed, the menu to be frequently selected by the user is generally limited to one or two of those selective menus. Therefore, the inventions as set forth in Claims 1 to 4 are employed to display the menu of the lower hierarchy to be highly possibly selected in advance, together with the menu of the predetermined higher hierarchy corresponding to the former menu, so that the menu selecting operation can have its efficiency improved. By similar reasons, the efficiency of the menu selecting operation can be improved by employing the inventions as set forth in Claims 1 to 4 in all the various systems, which has the display section for hierarchically displaying menus and uses the technique capable of inputting an instruction corresponding to the selected menu, such as: a multimedia terminal systems having all the functions of a portable personal computer, a portable telephone, a word processor, a portable TV and a TV game machine, in which menus for selecting the individual functions of those terminal systems are displayed in the display section so that they are displayed for each of the selected function by selecting the menu for each function; a system such as a facsimile or copying machine having a display section for hierarchically displaying the menus so that an instruction can be inputted according to the selected menu; a home information terminal system for home shopping or the like; or a public information terminal system to be placed at a town corner, a station or a town office for providing various guidances or services, such as an automatic vendor, an electronic book seller or a ticket seller.

Incidentally, in the embodiments, the input means forming a component of the invention are exemplified by the touch switches which are formed on the screen of the display 22a. Despite of this description, however, the input means or the input unit should not be limited to the touch switches but may be of any technique, if this technique can input an instruction for selecting any of a plurality of menus displayed in the display unit. For example, in case a cursor on the display screen is moved to select the menus by a mouse or cursor key, the selecting instruction may be inputted by any of button switch, pen or voice.

Moreover, even in case the menus of icons used in the personal computer or CAD are hierarchically displayed, the operation efficiency can be improved by employing the present invention.

In the first and second embodiments, moreover, the display screens are switched, each time the hierarchies of the menus to be displayed are changed by selecting some menu. Despite of this description, however, the present invention should not be limited to that case but may be extended to the case, in which the hierarchical menus are overlapped in multiple layers such that the menus of the lower hierarchy are displayed to partially cover the menus of the higher hierarchy in multiple layers, or in which the menus of higher and lower hierarchies are simultaneously displayed in one screen.

In addition, in the first and second embodiments, as exemplified in Fig. 5(B), the other facilities menu 16e as the menu of a predetermined hierarchy and the first genre menu 16d as the menu of the lower hierarchy to be displayed together are juxtaposed and enclosed by the frame indicated by "NAME OF FACILITIES" so that their relation can be understood. However, the present invention should not be limited to such case but can take any display mode, if not only the menu of a predetermined hierarchy but also at least one menu of the lower hierarchy corresponding to the former menu is displayed. Preferably, however, the menu of the lower hierarchy to be displayed together with the menu of the predetermined hierarchy may be devised to clarify that it corresponds to the menu of the predetermined hierarchy. The device may be exemplified by various means such as by connecting the two menus, by making the sizes of the menus different or by making the display colors of the menus different.

As has been described in detail hereinbefore, since a position retrieving system is equipped with the first storage means for storing the corresponding information, the landmark display information and the landmark position information and the second control means, the first control means displays the landmark in the area corresponding to the office number of the telephone number inputted from the input means, in the display means by retrieving the landmark display information from the corresponding information stored in the first storage means, so that the retrieve means retrieves the position of that one of the landmarks being displayed, which is selected by the select means. As a result, the operator is enabled to retrieve the position, which is reflected as much as possible by his will, and to enhance the facility even if he is not acquainted with the accurate position of the desired point or area, by the simple operations of inputting the office number of the telephone number and selecting any of the landmarks displayed in the display means.

Since, on the other hand, a position retrieving system 7 is equipped with the second storage means for storing the point position information, the related information, the landmark display information and the landmark position information, the detect means and the second control means, when it is detected by the detect means that the point position information indicating the position of the point and/or the area corresponding to the position related information inputted from the input means is not stored in the second storage means, the second control means displays the landmark in the vicinity of the point and/or the area corresponding to the position related information, in the display means, and retrieves the position corresponding to that one of the landmarks being displayed, which is selected by the select means, by the retrieve means. As a result, even in case the point position information indicating the position of the point and/or the area corresponding to the inputted position related information is not stored in the second storage means, the operator is enabled to retrieve the position in the vicinity of the point and/or the area corresponding to the inputted position related information by selecting any of the landmarks displayed in the display means. As a result, the operator is enabled to effect the position retrieval, which is reflected by his own will, by the simple operation of selecting the landmark.

## Claims

1. An instruction inputting system by a hierarchical menu selection, comprising:
a) a display unit for displaying a menu;
b) a storage unit for storing as data the hierarchical correspondences of a plurality of menus and instructions corresponding to the menus;
c) input means for inputting a select instruction to select a menu being displayed on said display unit;
d) first control means for executing the instruction inputted;
e) second control means for displaying the menu on said display unit on the basis of said data;
f) third control means for controlling said second control means in the presence of a next hierarchical menu corresponding to the menu selected by each select instruction inputted from said input means on the basis of said inputted select instruction, to display said next hierarchical menu on said display unit, and for inputting an instruction corresponding to the menu selected by said inputted select instruction, in the absence of said next hierarchical menu, to said first control means on the basis of said data,
g) fourth control means for controlling said second control means on the bass of predetermined information, to display on said display unit not only a menu in a predetermined hierarchy being displayed on said display unit but also at least one of a plurality of menus in a lower hierarchy corresponding to said menu, **characterized by**
h) storage means for storing at least one menù (16q) selected at the time when menus of previous hierarchy were selected, wherein said fourth control means displays on said display unit not only the menu in the predetermined hierarchy being displayed but also said at least one menù of said storage means.

2. An instruction inputting system by a hierarchical menu selection as set forth in Claim 1, further comprising:
learning means for learning each time when any of the plurality of menus in the lower hierarchy corresponding to the menu of said predetermined hierarchy is selected by inputting the select instruction from said input means the menu which is selected by said inputted select instruction, wherein
said predetermined information is composed of the learning result by said learning means; and in that said fourth control means controls said second control means on the basis of said learning result to display on said display unit not only the menu in the predetermined hierarchy being displayed but also at least one of the plurality of menus in the lower hierarchy corresponding to said menu.

3. A hierarchical menu displaying method in a system including: a display unit for displaying a menu; a storage unit for storing as data the hierarchical correspondences of a plurality of menus and instructions corresponding to the menus; an input unit for inputting a select instruction to select a menu being displayed on said display unit; and a control unit for executing the instruction inputted, comprising:
a) displaying a menu on said display unit on the basis of said data;
b) displaying in the presence of a next hierarchical menu corresponding to the menu selected by each select instruction inputted from said input means said next hierarchical menu on said display unit on the basis of said data;
c) and inputting an instruction corresponding to the menu selected by said inputted select instruction in the absence of said next hierarchical menu to said control unit on the basis of said data,
d) displaying on said display unit not only a menu in a predetermined hierarchy being displayed on said display unit but also at least one of a plurality of menus in a lower hierarchy corresponding to said menu, **characterized by**
e) storing at least one menu (16q) selected at the time when menus of previous hierarchy were selected, and
f) displaying not only the menu in the predetermined hierarchy but also said at least one menù (16q).

4. A hierarchical menu displaying method as set forth in Claim 3, further comprising:
learning each time when any of the plurality of menus in
the lower hierarchy corresponding to the menu of said predetermined hierarchy is selected by inputting the select instruction from said input means the menu which
is selected by said inputted select instruction; and
displaying on said display unit not only the menu in the predetermined hierarchy being displayed but also at
least one of the plurality of menus in the lower hierarchy corresponding to said menu on the basis of
said learning result and said data.

5. A vehicular guidance information outputting system for suitably reading guiding data stored in a storage unit on the basis of a predetermined input or the state of a vehicle for mounting said system to output predetermined guidance information from an output unit, incorporating an instruction inputting system by a hierarchical menu selection as set forth in Claim 1 or 2.

## Patentansprüche

1. Befehlseingabesystem mit einer hierarchischen Menüauswahl, aufweisend:
a) eine Anzeigeeinheit zum Anzeigen eines Menüs,
b) eine Speichereinheit zum Speichern der hierarchischen Entsprechungen mehrerer Menüs und den Menüs entsprechender Befehle als Daten,
c) eine Eingabeeinrichtung zum Eingeben eines Auswahlbefehls zum Auswählen eines auf der Anzeigeeinheit angezeigten Menüs,
d) eine erste Steuereinrichtung zum Ausführen des eingegebenen Befehls,
e) eine zweite Steuereinrichtung zum Anzeigen des Menüs auf der Anzeigeeinheit auf der Grundlage der Daten,
f) eine dritte Steuereinrichtung zum Steuern der zweiten Steuereinrichtung bei Vorhandensein eines nächsten hierarchischen Menüs, das dem Menü entspricht, das durch jeden von der Eingabeeinrichtung auf der Grundlage des eingegebenen Auswahlbefehls eingegebenen Auswahlbefehl ausgewählt wurde, um das nächste hierarchische Menü auf der Anzeigeeinheit anzuzeigen, und zur Eingabe eines Befehls, der dem von dem eingegebenen Auswahlbefehl ausgewählten Menü entspricht, bei Nichtvorhandensein des nächsten hierarchischen Menüs in die erste Steuereinrichtung auf der Grundlage der Daten,
g) eine vierte Steuereinrichtung zum Steuern der zweiten Steuereinrichtung auf der Grundlage vorgegebener Informationen zum Anzeigen nicht nur eines auf der Anzeigeeinheit angezeigten Menüs in einer vorgegebenen Hierarchie sondern auch von mindestens einem von mehreren Menüs in einer dem Menü entsprechenden niedrigeren Hierarchie auf der Anzeigeeinheit, **gekennzeichnet durch**
h) eine Speichereinrichtung zum Speichern von mindestens einem Menü (16q), das zu der Zeit ausgewählt wurde, als die Menüs der vorhergehenden Hierarchie ausgewählt wurden, wobei die vierte Steuereinrichtung nicht nur das angezeigte Menü in der vorgegebenen Hierarchie, sondern auch das mindestens eine Menü der Speichereinrichtung auf der Anzeigeeinheit anzeigt.

2. Befehlseingabesystem mit einer hierarchischen Menüauswahl nach Anspruch 1, weiter aufweisend:
eine Lerneinrichtung zum jedesmal dann erfolgenden Lernen, wenn eines der mehreren Menüs in der dem Menü der vorgegebenen Hierarchie entsprechenden niedrigeren Hierarchie durch Eingaben des Auswahlbefehls von der Eingabeeinrichtung ausgewählt wird, des von dem eingegebenen Auswahlbefehl ausgewählten Menüs, wobei
die vorgegebenen Informationen aus dem Lernergebnis der Lerneinrichtung bestehen und die vierte Steuereinrichtung die zweite Steuereinrichtung auf der Grundlage des Lernergebnisses steuert, um nicht nur das angezeigte Menü in der vorgegebenen Hierarchie sondern auch mindestens eines der mehreren Menüs in der dem Menü entsprechenden niedrigeren Hierarchie auf der Anzeigeeinheit anzuzeigen.

3. Verfahren zum Anzeigen eines hierarchischen Menüs in einem System, welches aufweist: eine Anzeigeeinheit zum Anzeigen eines Menüs, eine Speichereinheit zum Speichern der hierarchischen Entsprechungen mehrerer Menüs und den Menüs entsprechender Befehle als Daten, eine Eingabeeinheit zum Eingeben eines Auswahlbefehls zum Auswählen eines auf der Anzeigeeinheit angezeigten Menüs und eine Steuereinheit zum Ausführen des eingegebenen Befehls, mit den Schritten:
a) Anzeigen eines Menüs auf der Anzeigeeinheit auf der Grundlage der Daten,
b) Anzeigen bei Vorhandensein eines nächsten hierarchischen Menüs, das dem Menü entspricht, das durch jeden von der Eingabeeinrichtung eingegebenen Auswahlbefehl ausgewählt wurde, des nächsten hierarchischen Menüs auf der Anzeigeeinheit auf der Grundlage der Daten,
c) Eingeben eines Befehls, der dem von dem eingegebenen Auswahlbefehl ausgewählten Menü entspricht, bei Nichtvorhandensein des nächsten hierarchischen Menüs in die Steuereinheit auf der Grundlage der Daten,
d) Anzeigen nicht nur eines auf der Anzeigeeinheit angezeigten Menüs in einer vorgegebenen Hierarchie sondern auch von mindestens einem von mehreren Menüs in einer dem Menü entsprechenden niedrigeren Hierarchie auf der Anzeigeeinheit, **gekennzeichnet durch**
e) Speichern von mindestens einem Menü (16q), das zu der Zeit ausgewählt wurde, als die Menüs der vorhergehenden Hierarchie ausgewählt wurden, und
f) Anzeigen nicht nur des Menüs in der vorgegebenen Hierarchie sondern auch des mindestens einen Menüs (16q).

4. Verfahren zum Anzeigen eines hierarchischen Menüs nach Anspruch 3, weiter aufweisend:
Lernen, jedesmal dann, wenn eines der mehreren Menüs in der dem Menü der vorhergehenden Hierarchie entsprechenden niedrigeren Hierarchie durch Eingeben des Auswahlbefehls von der Eingabeeinrichtung ausgewählt wird, des von dem eingegebenen Auswahlbefehl ausgewählten Menüs, und
Anzeigen nicht nur des angezeigten Menüs in der vorgegebenen Hierarchie sondern auch von mindestens einem der mehreren Menüs in der dem Menü entsprechenden niedrigeren Hierarchie auf der Anzeigeeinheit auf der Grundlage des Lernergebnisses und der Daten.

5. System zur Ausgabe von Fahrzeug-Leitinformationen zum geeigneten Lesen von in einer Speichereinheit gespeicherten Leitdaten auf der Grundlage einer vorgegebenen Eingabe oder des Zustands eines Fahrzeugs zum Einrichten des Systems, um vorgegebene Leitinformationen von einer Ausgabeeinheit auszugeben, welches ein Befehlseingabesystem mit einer hierarchischen Menüauswahl nach Anspruch 1 oder 2 aufweist.

## Revendications

1. Système d'entrée d'instructions par sélection par menu hiérarchique, comprenant :
a) un module d'affichage pour afficher un menu;
b) un module de stockage pour stocker sous forme de données les correspondances hiérarchiques d'une pluralité de menus et d'instructions correspondant aux menus;
c) un moyen d'entrée pour entrer une instruction de sélection pour choisir un menu affiché sur ledit module d'affichage;
d) un premier moyen de commande pour exécuter l'instruction entrée;
e) un deuxième moyen de commande pour afficher le menu sur ledit module d'affichage en se basant sur lesdites données;
f) un troisième moyen de commande pour commander ledit deuxième moyen de commande en présence d'un menu hiérarchique suivant correspondant au menu choisi par chaque instruction de sélection entrée depuis ledit moyen d'entrée en se basant sur ladite instruction de sélection entrée, pour afficher ledit menu hiérarchique suivant sur ledit module d'affichage, et pour entrer une instruction correspondant au menu choisi par ladite instruction de sélection entrée, en l'absence dudit menu hiérarchique suivant, audit premier moyen de commande en se basant sur lesdites données,
g) un quatrième moyen de commande pour commander ledit deuxième moyen de commande en se basant sur une information prédéterminée, pour afficher sur ledit module d'affichage non seulement un menu dans une hiérarchie prédéterminée affichée sur ledit module d'affichage mais aussi au moins un d'une pluralité de menus dans une hiérarchie inférieure correspondant audit menu, **caractérisé par**
h) un moyen de stockage pour stocker au moins un menu (16q) choisi au moment où des menus de la hiérarchie précédente étaient sélectionnés, ledit quatrième moyen de commande affichant sur ledit module d'affichage non seulement le menu dans la hiérarchie prédéterminée affichée mais aussi ledit menu au nombre d'au moins un dudit moyen de stockage.

2. Système d'entrée d'instructions par sélection par menu hiérarchique selon la revendication 1, comprenant en outre :
un moyen d'apprentissage pour apprendre chaque fois que n'importe lequel de la pluralité de menus dans la hiérarchie inférieure correspondant au menu de ladite hiérarchie prédéterminée est choisi en entrant l'instruction de sélection à partir dudit moyen d'entrée le menu qui est choisi par ladite instruction de sélection entrée,
ladite information prédéterminée étant composée du résultat d'apprentissage par ledit moyen d'apprentissage; et en ce que ledit quatrième moyen de commande commande ledit deuxième moyen de commande en se basant sur ledit résultat d'apprentissage pour afficher sur ledit module d'affichage non seulement le menu dans la hiérarchie prédéterminée affichée mais aussi au moins un de la pluralité de menus dans la hiérarchie inférieure correspondant audit menu.

3. Procédé d'affichage d'un menu hiérarchique dans un système comportant : un module d'affichage pour afficher un menu; un module de stockage pour stocker sous forme de données les correspondances hiérarchiques d'une pluralité de menus et d'instructions correspondant aux menus; un module d'entrée pour entrer une instruction de sélection pour choisir un menu affiché sur ledit module d'affichage; et un module de commande pour exécuter l'instruction entrée, comprenant les opérations consistant à :
a) afficher un menu sur ledit module d'affichage en se basant sur lesdites données;
b) afficher en la présence d'un menu hiérarchique suivant correspondant au menu choisi par chaque instruction de sélection entrée au moyen dudit moyen d'entrée ledit menu hiérarchique suivant sur ledit module d'affichage en se basant sur lesdites données;
c) et entrer une instruction correspondant au menu choisi par ladite instruction de sélection entrée en l'absence dudit menu hiérarchique suivant audit module de commande en se basant sur lesdites données,
d) afficher sur ledit module d'affichage non seulement un menu dans une hiérarchie prédéterminée affichée sur ledit module d'affichage mais aussi au moins l'un d'une pluralité de menus dans une hiérarchie inférieure correspondant audit menu, **caractérisé par** les opérations consistant à :
e) stocker au moins un menu (16q) choisi au moment où des menus d'une hiérarchie précédente étaient sélectionnés, et
f) afficher non seulement le menu dans la hiérarchie prédéterminée mais aussi ledit menu au nombre d'au moins un (16q).

4. Procédé d'affichage d'un menu hiérarchique selon la revendication 3, comprenant en outre les opérations consistant à :
apprendre chaque fois que n'importe lequel de la pluralité de menus dans la hiérarchie inférieure correspondant au menu de ladite hiérarchie prédéterminée est choisi en entrant l'instruction de sélection à partir dudit moyen d'entrée le menu qui est choisi par ladite instruction de sélection entrée; et
afficher sur ledit module d'affichage non seulement le menu dans la hiérarchie prédéterminée affichée mais aussi au moins un de la pluralité de menus dans la hiérarchie inférieure correspondant audit menu en se basant sur ledit résultat d'apprentissage et sur lesdites données.

5. Système de sortie d'informations de guidage pour véhicule pour lire de manière appropriée des données de guidage stockées dans un module de stockage en se basant sur une entrée prédéterminée ou l'état d'un véhicule pour monter ledit système pour donner des informations de guidage prédéterminées à partir d'un module de sortie, incluant un système d'entrée d'instructions par sélection par menu hiérarchique selon la revendication 1 ou 2.
